(19) Europäisches Patentamt
European Patent Office
Office européen des brevets

(11) Veröffentlichungsnummer: **0 278 446 B1**

(12) **EUROPÄISCHE PATENTSCHRIFT**

(45) Veröffentlichungstag der Patentschrift: **29.09.93**

(51) Int. Cl.⁵: **G11B 7/00**, G11B 7/013, //G11B7/24,G11B7/12

(21) Anmeldenummer: **88101773.5**

(22) Anmeldetag: **08.02.88**

# (54) Laseroptisches Schreib- und Leseverfahren.

(30) Priorität: **11.02.87 DE 3704146**

(43) Veröffentlichungstag der Anmeldung:
**17.08.88 Patentblatt 88/33**

(45) Bekanntmachung des Hinweises auf die Patenterteilung:
**29.09.93 Patentblatt 93/39**

(84) Benannte Vertragsstaaten:
**CH DE FR GB IT LI NL**

(56) Entgegenhaltungen:
**EP-A- 0 141 512**
**EP-A- 0 171 045**
**DE-A- 3 324 770**

**PATENT ABSTRACTS OF JAPAN vol. 10, no. 364 (P-524)(2421) 05 Dezember 1986, & JP-A-61 160847**

**PATENT ABSTRACTS OF JAPAN vol. 10, no. 300 (P-506)(2356) 14 Oktober 1986, & JP-A-61 115251**

**SOV. TECH. PHYS. LETT. vol. 9, no. 11, November 1983, USA Seiten 580 - 581; IVANOV ET AL.: "Effect of Laser Bombardment on the Optical Properties of a Polymer Liquid"**

(73) Patentinhaber: **BASF Aktiengesellschaft**
**Carl-Bosch-Strasse 38**
**D-67063 Ludwigshafen(DE)**

(72) Erfinder: **Wagenblast, Gerhard, Dr.**
**Hanns-Fay-Strasse 3**
**D-6710 Frankenthal(DE)**
Erfinder: **Etzbach, Karl-Heinz, Dr.**
**Carl-Bosch-Ring 55**
**D-6710 Frankenthal(DE)**
Erfinder: **Hisgen, Bernd, Dr.**
**Goethestrasse 6**
**D-6703 Limburgerhof(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 278 446 B1

## Beschreibung

Die Erfindung betrifft ein laseroptisches Schreib- und Leseverfahren, bei dem die homogen-planar orientierte flüssigkristalline Verbindungen enthaltende, thermisch veränderbare Aufzeichnungsschicht eines mehrschichtigen, flächenförmigen Aufzeichnungsmaterials mittels eines Schreiblaserstrahls mit analogen oder digitalen Daten in Form von thermisch veränderten Bereichen beschrieben wird, wonach die eingeschriebenen Daten mittels eines Leselaserstrahls gelesen werden, wobei man das von dem Aufzeichnungsmaterial transmittierte oder reflektierte Licht analysiert.

Außerdem betrifft die Erfindung laseroptische Schreib- und Lesegeräte, welche im wesentlichen einen Plattendrehteller und einen laseroptischen Schreib- und Lesekopf enthalten und mit deren Hilfe sich das erfindungsgemäße Verfahren besonders gut durchführen läßt.

Desweiteren betrifft die Erfindung mehrschichtige, laseroptische Datenplatten, welche sich besonders gut für das erfindungsgemäße Verfahren eignen.

Flüssigkristalline Verbindungen können flüssigkristalline Phasen bilden. Dies sind optisch anisotrope Flüssigkeiten, welche im Gegensatz zu normalen Flüssigkeiten eine Fernordnung ihrer Moleküle aufweisen. Beim Schmelzen einer festen flüssigkristallinen Verbindung bildet sich daher zunächst eine flüssigkristalline flüssige Phase, z.B. eine smektische, die bei weiterer Temperaturerhöhung bei einer bestimmten Phasenübergangstemperatur entweder in eine weitere, z.B. nematische, flüssigkristalline Phase oder in die optisch isotrope Schmelze übergeht. Kühlt man letztere wieder ab, so bilden sich bei den entsprechenden Umwandlungstemperaturen die flüssigkristallinen Phasen und letztlich der kristalline Zustand wieder aus. Bei Polymeren mit mesogenen Gruppen, d.h. Gruppen, die sich von flüssigkristallinen Verbindungen ableiten, ist es aber möglich, den einmal erzeugten flüssigkristallinen Zustand beim Abkühlen einzufrieren, wenn man die flüssigkristalline Polymerschmelze unter eine bestimmte Temperatur, z.B. die Glastemperatur Tg des Polymeren, abkühlt, so daß ein optisch anisotroper Festkörper resultiert, der indes nicht kristallin, sondern glasförmig ist.

Flüssigkristalline Phasen können in Schmelzen oder im eingefrorenen Zustand leicht anhand ihrer optischen Anisotropie nachgewiesen werden. So zeigen sie beispielsweise unter dem Polarisationsmikroskop bei gekreuzten Polarisatoren doppelbrechende Texturen, wogegen isotrope Schmelzen hierbei das Licht löschen und daher schwarz erscheinen.

Man kann daher Schichten, welche flüssigkristalline Verbindungen enthalten, zur Informationsaufzeichnung verwenden, indem man durch lokales Erhitzen in solchen Schichten Bereiche mit veränderten optischen Eigenschaften erzeugt. Diese Bereiche können nach dem Abkühlen, sofern sie dann noch stabil sind, nachgewiesen, d.h. "gelesen" werden.

Aus der EP-A-0 171 045 geht hervor, daß es möglich ist, in eine Aufzeichnungsschicht aus glasförmig erstarrten, homogen-planar orientierten, flüssigkristallinen Polymeren durch lokales Erhitzen mittels eines Laserstrahls Daten in Form von thermisch veränderten Bereichen einzuschreiben. Diese Bereiche weisen eine gegenüber dem Ausgangszustand veränderte Lichtstreuung, optische Aktivität, Doppelbrechung und/oder Absorption auf, welche ihrer Identifizierung dienen können. Aus dieser Patentschrift geht nicht hervor, was im einzelnen unternommen werden muß, um zu einem Verfahren zur laseroptischen Datenaufzeichnung zu gelangen, welches dem Stand der Technik überlegen ist.

Unter homogen-planarer Orientierung ist hierbei die einheitliche Ausrichtung der flüssigkristallinen Gruppen oder Verbindungen in einer Schicht parallel oder nahezu parallel zur Schichtebene zu verstehen. Liegt eine Ausrichtung senkrecht oder nahezu senkrecht zur Schichtebene vor, so spricht man von homeotroper Orientierung. Nicht flüssigkristalline Zusatzstoffe oder zusätzlich vorhandene nicht flüssigkristalline Gruppen können sich ebenfalls in entsprechender Weise in einer orientierten Schicht mit ausrichten.

Laseroptische Schreib- und Lesegeräte sind ebenfalls bekannt. Sie enthalten im wesentlichen einen Plattendrehteller und einen laseroptischen Schreib- und Lesekopf, dazu noch mechanische Servoeinrichtungen zur Korrektur der Spurlage, Autofokussiereinrichtungen, optische Elemente zur Analyse von Spurlagen- und Autofokusfehlern, Detektoreinrichtungen mit vorgeschalteten Interferenzfiltern zur Erfassung des von den Aufzeichnungsmaterialien reflektierten Lichts des Leselasers und geeignete elektronische Bauteile.

Im allgemeinen weist der laseroptische Schreib- und Lesekopf folgende Bauteile auf:

- eine Laserlichtquelle für Laserlicht einer Wellenlänge $\lambda_1$, welche von der betreffenden Aufzeichnungsschicht gut absorbiert wird, oder
- zwei Laserlichtquellen für Laserlicht zweier unterschiedlicher Wellenlängen $\lambda_1$ und $\lambda_2$, wobei das Laserlicht der Wellenlänge $\lambda_2$ von der betreffenden Aufzeichnungsschicht nur schlecht oder gar nicht absorbiert wird,
- einen dielektrischen Strahlteiler, der dem Zusammenführen oder Trennen von Strahlen unterschiedlicher Wellenlänge $\lambda$ dient,

- einen Polarisationsstrahlteiler oder einen Strahlteiler, dessen Wirkung von der Polarisation des einfallenden Lichts im wesentlichen unabhängig ist, und
- eine $\lambda/4$-Platte.

Solche laseroptischen Schreib- und Lesegeräte dienen dem Beschreiben und Lesen von laseroptischen Datenplatten mit Aufzeichnungsschichten auf der Basis stark reflektierender, thermisch deformierbarer oder magnetooptischer Materialien, in welche die Daten in der Form von Löchern (ablative Aufzeichnung), Kratern (deformative Aufzeichnung) oder ummagnetisierten Bereichen (magnetooptische Aufzeichnung) eingeschrieben werden. Die eingeschriebenen Daten werden anschließend mit Hilfe eines Laserstrahls gelesen, wobei man die unterschiedliche Reflektivität der Löcher und der unbeschriebenen Bereiche (ablative Aufzeichnung), die Lichtstreuung an den Kratern (deformative Aufzeichnung) oder die unterschiedliche Drehung der Ebene der Polarisation $\vec{E}$ des Laserlichts durch entgegengesetzt magnetisierte Bereiche (magnetooptische Aufzeichnung) ausnutzt.

Allen Geräten ist gemeinsam, daß der Winkel zwischen der Ebene der Polarisation $\vec{E}$ der vom laseroptischen Kopf ausgestrahlten Laserstrahlen und der Datenspur von vornherein festgelegt ist und nachträglich nicht mehr geändert werden kann. Außerdem sind die bekannten Geräte auf die genannten Aufzeichnungsprinzipien zugeschnitten; sie lassen sich daher nicht oder nur sehr schlecht zum Beschreiben und Lesen von Aufzeichnungsmaterialien mit Aufzeichnungsschichten auf der Basis homogen-planar orientierter flüssigkristalliner Verbindungen verwenden, so daß sie auch nicht die diesen Aufzeichnungsmaterialien innewohnenden Vorteile nutzbar machen können.

Obwohl mehrschichtige, flächenförmige, laseroptische Aufzeichnungsmaterialien mit einer homogen-planar orientierte flüssigkristalline Verbindungen enthaltenden, thermisch veränderbaren Aufzeichnungsschicht bekannt sind, ist dem Stand der Technik nichts über entsprechende Datenplatten zu entnehmen. Zwar geht aus dem Artikel von H. Birecki et al., "Erasable Optical Liquid Crystal Disk Memory", in Proceedings of SPIE, Band 420, 4. bis 6. Juni, Optical Storage Media, Washington 1983, Seiten 194 bis 199 eine mehrschichtige laseroptische Datenplatte hervor, deren Aufzeichnungsschicht indes homeotrop orientierte flüssigkristalline Verbindungen enthält. Jedoch werden die Daten in Form von lichtstreuenden Bereichen in diese Datenplatte eingeschrieben, und es wird angegeben, daß nur homeotrop orientierte Schichten hierfür geeignet sind. Darüber hinaus ist dem Artikel von T. Urabe et al., "Laser-addressed liquid crystal light valve with dichroic dye added as a laser beam absorber", in Journal of Applied Physics, Band 54, Heft 3, März 1983, Seiten 1522 bis 1588, ein Vorurteil gegenüber Aufzeichnungsmaterialien mit homogen-planar orientierten flüssigkristallinen Aufzeichnungsschichten zu entnehmen, welches noch durch die Artikel von V.P. Shibaev et al., "Thermotropic liquid-crystalline polymers: 14. Thermorecording on liquid crystalline polymers with the aid of a laser beam", in Polymer Communications, Band 24, Dezember 1983, Seiten 364 bis 365, und von H.J. Coles et al., "High-resolution laser-addressed liquid crystal polymer storage displays", in Polymer, Band 26, November 1985, Seiten 1801 bis 1806, noch verstärkt wird, da diese ausschließlich homeotrop orientierte Aufzeichnungsschichten betreffen und homogen-planar orientierte gar nicht erst in Betracht ziehen.

Zudem weist die laseroptische Datenplatte von H. Birecki et al. Nachteile hinsichtlich des optischen Kontrastes, der Schreib- und Lesegeschwindigkeit, der Fehlerrate und der Herstellbarkeit auf. Außerdem wird für das Lesen der eingeschriebenen Daten eine aufwendige Dunkelfeldoptik und wegen des schwachen Signals ein Photomultiplier als Detektor benötigt. Darüberhinaus ist die Langzeitstabilität der beschriebenen Datenplatte unbefriedigend, was einen Informationsverlust bei längerer Lagerung zur Folge hat.

Aufgabe der vorliegenden Erfindung ist es, ein laseroptisches Schreib- und Leseverfahren zu finden, bei dem in die homogen-planar orientierte flüssigkristalline Verbindungen enthaltende, thermisch veränderbare Aufzeichnungsschicht eines mehrschichtigen, flächenförmigen Aufzeichnungsmaterials mittels eines Schreiblasers digitale oder analoge Daten in Form von thermisch veränderten Bereichen eingeschrieben werden, wonach die eingeschriebenen Daten mittels eines Leselaserstrahls gelesen werden, wobei man das von dem Aufzeichnungsmaterial transmittierte oder reflektierte Licht erfaßt. Das Verfahren soll dem Stand der Technik hinsichtlich der Schreib- und Lesegeschwindigkeit und der erzielbaren Empfindlichkeit überlegen sein und zu einer niedrigeren Fehlerrate führen. Außerdem soll es die Möglichkeit der Detektion von Fehlinformationen und der Anpassung an vorgegebene technische Rahmenbedingungen bieten.

Außerdem ist es Aufgabe der vorliegenden Erfindung, laseroptische Schreib- und Lesegeräte zu finden, mit deren Hilfe sich ein solches erfindungsgemäßes Verfahren in besonders vorteilhafter Weise durchführen läßt.

Desweiteren ist es Aufgabe der Erfindung, mehrschichtige, laseroptische Datenplatten zu finden, welche besonders schnell mit niedriger Laserleistung weitgehend fehlerfrei beschrieben und gelesen werden können, einen besonders hohen optischen Kontrast aufweisen und einfach herstellbar sind. Darüber hinaus sollen solche Datenplatten auch im beschriebenen Zustand lange Zeit stabil sein, ohne daß ein Informationsverlust eintritt. Außerdem sollen sie sich besonders gut für ein erfindungsgemäßes Verfahren, welches mit Hilfe erfindungsgemäßer laseroptischer Geräte ausgeführt wird, eignen.

Demgemäß wurde ein neues laseroptisches Schreib- und Leseverfahren gefunden, bei dem die homogen-planar orientierte flüssigkristalline Verbindungen enthaltende, thermisch veränderbare Aufzeichnungsschicht eines mehrschichtigen, flächenförmigen Aufzeichnungsmaterials mittels eines Schreiblaserstrahls mit analogen oder digitalen Daten in Form von thermisch veränderten Bereichen beschrieben wird, wonach die eingeschriebenen Daten mittels eines Leselaserstrahls gelesen werden, wobei man das von dem Aufzeichnungsmaterial transmittierte oder reflektierte Licht analysiert.

Das Verfahren ist dadurch gekennzeichnet, daß man hierbei

a) die Daten über die Bestimmung des polarisationsoptischen Kontrastes zwischen den thermisch veränderten und den unveränderten Bereichen ausliest und/oder hierzu die Interferenz der Lichtwellen ausnutzt, welche sich aus den Laserlichtwellen mit gaußförmiger Intensitätsverteilung aufgrund der unterschiedlichen Phasengeschwindigkeit des Lichts im Zentrum thermisch veränderter Bereiche einerseits und ihrer thermisch unveränderten Umgebung andererseits bilden,

b) eine Aufzeichnungsschicht verwendet, die ein optisch einachsiges Medium darstellt, für dessen Brechungsindices

$n_1$ (senkrecht zur Aufzeichnungsschichtebene),
$n_2$ (in der Aufzeichnungsschichtebene, senkrecht zur optischen Hauptachse),
$n_3$ (in der Aufzeichnungsschichtebene, parallel zur optischen Hauptachse) und
$n_{iso}$ (Brechungsindex der thermisch veränderten Bereiche) mit

$$n_{iso} = 1/3\ (n_1 + n_2 + n_3)$$

für Licht der Wellenlänge $\lambda = 780$ nm
die Beziehungen
$n_1 = n_2 < n_3$ oder
$n_1 = n_2 > n_3$
und

$|\Delta n| = |n_3 - n_2| > 0{,}05$ oder
$|\Delta n| = |n_{iso} - n_2| > 0{,}05$ oder alternativ
$|\Delta n| = |n_{iso} - n_3| > 0{,}05$

gelten, und die eine Dicke d von
$0{,}05\ \lambda'/|\Delta n|$ bis $0{,}6\ \lambda'\ |\Delta n|$
hat, wobei $\lambda'$ = Wellenlänge des Leselaserlichts,

c) den Leselaserstrahl in relativer Bewegung in Richtung der optischen Hauptachse der Aufzeichnungsschicht oder senkrecht dazu über das Aufzeichnungsmaterial hinwegführt und dabei den Leselaserstrahl so einstrahlt, daß die Ebene seiner Polarisation $\vec{E}$ beim Auftreffen auf die Aufzeichnungsschicht mit deren optischer Hauptachse einen Winkel $\Theta$ von $0° \pm 10°$, $45° \pm 10°$ oder $90° \pm 5°$ bildet,
und

d) für den Fall, daß das transmittierte Licht analysiert wird, einen Laserstrahl von Licht der Wellenlänge $\lambda'$ von
$1{,}66\ d\ |\Delta n|$ bis $5\ d\ |\Delta n|$
und für den Fall, daß das reflektierte Licht analysiert wird, einen Laserstrahl der Wellenlänge $\lambda'$ von
$3{,}33\ d\ |\Delta n|$ bis $20\ d\ |\Delta n|$
verwendet.

Eine bevorzugte Ausführungsform des erfindungsgemäßen Verfahrens ist dadurch gekennzeichnet, daß man hierzu eine Aufzeichnungsschicht verwendet, die orientierte, dichroitische, farbgebende Komponenten enthält und den Schreiblaserstrahl so einstrahlt, daß die Ebene seiner Polarisation $\vec{E}$ beim Auftreffen auf die Aufzeichnungsschicht mit dem Übergangsdipolmoment $\vec{\mu}$ der orientierten dichroitischen Komponenten einen Winkel $\Theta'$ zwischen $-45°$ und $+45°$ bildet.

Außerdem wurde ein laseroptisches Schreib- und Lesegerät für die Durchführung des erfindungsgemäßen Verfahrens gefunden, welches im wesentlichen einen Plattendrehteller und einen laseroptischen Schreib- und Lesekopf enthält, wobei der laseroptische Schreib- und Lesekopf eine Laserlichtquelle oder mehrere Laserlichtquellen für Laserlicht unterschiedlicher Wellenlängen und - im Strahlengang des Laserlichts - einen dielektrischen Strahlteiler zum Zusammenführen von Laserstrahlen unterschiedlicher Wellenlängen, einen Polarisationsstrahlteiler oder einen im wesentlichen nicht polarisierenden Strahlteiler sowie

gegebenenfalls eine λ/4 Platte vorsieht. Das laseroptische Schreib- und Lesegerät ist dadurch gekennzeichnet, daß

a) der laseroptische Schreib- und Lesekopf um die optische Achse, welche durch die Ausbreitungsrichtung des Laserlichts definiert ist, in einem Winkel von 0° bis 90° drehbar gelagert ist und daß Vorrichtungen zu seiner Arretierung bei 0°, 45° und 90° vorgesehen sind,

und/oder daß sich

b) im Strahlengang zwischen dem Polarisationsstrahlteiler oder dem im wesentlichen nicht polarisierenden Strahlteiler und der Aufzeichnungsschicht zusätzlich zur λ/4-Platte oder an ihrer Stelle eine λ/2-Platte befindet,

wobei

c) die λ/4- und/oder die λ/2-Platte um die optische Achse in einem Winkel von 0° bis ±45° zur Polarisationsebene $\vec{E}$ des emittierten linear polarisierten Laserlichts drehbar gelagert ist und daß Vorrichtungen zu ihrer Arretierung bei 0°, ±22,5° und ±45° vorgesehen sind.

Desweiteren wurde eine mehrschichtige laseroptische Datenplatte für die Durchführung des erfindungsgemäßen Verfahrens mit dem erfindungsgemäßen laseroptischen Schreib- und Lesegerät gefunden, wobei die Datenplatte durch eine Trägerschicht, mindestens eine Orientierungsschicht und eine der Orientierungsschicht unmittelbar benachbarten Aufzeichnungsschicht gebildet ist, wobei die Aufzeichnungsschicht

1. homogen-planar und tangential orientierte oder homogen-planar und radial orientierte flüssigkristalline Verbindungen enthält,

2. ein optisch einachsiges Medium darstellt, für dessen Brechungsindices
$n_1$ (senkrecht zur Aufzeichnungsschichtebene),
$n_2$ (in der Aufzeichnungsschichtebene, senkrecht zur optischen Hauptache),
$n_3$ (in der Aufzeichnungsschichtebene, parallel zur optischen Hauptachse) und
$n_{iso}$ (Brechungsindex der thermisch veräderten Bereiche) mit $n_{iso} = 1/3 (n_1 + n_2 + n_3)$
für Licht der Wellenlänge λ = 780 nm die Beziehungen
$n_1 = n_2 < n_3$ oder
$n_1 = n_2 > n_3$
und

$|\Delta n| = |n_3 - n_2| > 0{,}05$ oder
$|\Delta n| = |n_{iso} - n_2| > 0{,}05$ oder alternativ
$|\Delta n| = |n_{iso} - n_3| > 0{,}05$

gelten, und welche

3. eine Dicke d von
$0{,}05\ \lambda'/|\Delta n|$ bis $0{,}6\ \lambda'\ |\Delta n|$
aufweist, wobei λ' = Wellenlänge des Leselaserlichts.

Das erfindungsgemäße Verfahren wird ausgeübt an mehrschichtigen flächenförmigen Aufzeichnungsmaterialien gemäß Oberbegriff von Anspruch 1.

Unter dem Begriff "flächenförmig" werden dabei alle Raumformen zusammengefaßt, deren Dicke erheblich geringer ist als ihre Länge und Breite. Geeignet sind demnach band-, platten- oder scheibenförmige Aufzeichnungsmaterialien, von denen die scheibenförmigen bevorzugt sind. Letztere werden im allgemeinen als "Datenplatten" oder als "Disks" bezeichnet.

Durch den Begriff "mehrschichtig" wird darauf hingewiesen, daß das Aufzeichnungsmaterial außer der Aufzeichnungsschicht noch weitere Schichten enthält, welche gleichfalls für die Funktion des Materials von Bedeutung sind.

Schichten dieser Art sind dimensionsstabile Trägerschichten, transparente oder nicht transparente Elektrodenschichten und Orientierungsschichten, welche eine homogen-planare Orientierung flüssigkristalliner Verbindungen hervorrufen. Darüberhinaus kann das Aufzeichnungsmaterial noch Reflektorschichten, Reflektor-Absorberschichten und Schutzschichten enthalten.

Beispiele geeigneter dimensionsstabiler Trägerschichten sind Folien, Platten oder Scheiben aus nichtleitenden, transparenten und optisch klaren Materialien wie Polyethylenterephthalat, Polycarbonat, Polymethylmethacrylat oder Glas; oder aus Metall, von denen Scheiben aus Polycarbonat, Polymethylmethacrylat oder Glas bevorzugt sind.

Beispiele geeigneter Orientierungsschichten sind schräg aufgedampfte Siliciumoxidschichten oder angeriebene Polyimidschichten.

Beispiele geeigneter Reflektorschichten sind die üblichen und bekannten dünnen Metallschichten.

Beispiele geeigneter Reflektor-Absorberschichten sind die bekannten dünnen Schichten aus halbleitenden Materialien wie CdSe oder CdTe. Sie weisen für Licht der Wellenlänge $\lambda_1'$ eine Absorption von 10 bis 85 % und für Licht der Wellenlänge $\lambda_2'$ eine Reflektivität von 10 bis 80 % auf.

Essentieller Bestandteil des Aufzeichnungsmaterials ist die Aufzeichnungsschicht. Diese liegt einer Orientierungsschicht direkt auf oder sie wird von zwei Orientierungsschichten eingeschlossen, wobei ersteres bevorzugt ist. Die Aufzeichnungsschicht enthält flüssigkristalline Verbindungen in homogen-planarer Orientierung.

Hierfür geeignet sind alle flüssigkristalline Verbindungen, welche zwischen -20 und 300 °C eine oder mehrere flüssigkristalline Phasen bilden.

Gut geeignet sind farblose, nicht dichroitisch farbige oder dichroitisch farbige, niedermolekulare flüssigkristalline Verbindungen, z.B. aus der Klasse der Oligophenylene, der aromatischen Azomethine oder der Merocyanine, deren flüssigkristalliner Zustand in einer geeigneten Polymermatrix eingefroren werden kann.

Gut geeignet sind überwiegend lineare, flüssigkristalline Polymere mit mesogenen Gruppen in der Polymerhauptkette, z.B. aus der Klasse der Polyester, Polyesteramide, Polyesterether, Polyestercarbonate, Polyesteramidimide oder Polyesterimide.

Besonders gut geeignet sind indes Polymerisate mit seitenständigen mesogenen Gruppen.

Beispiele besonders gut geeigneter Polymerisate mit seitenständigen mesogenen Gruppen sind solche, deren Ketten aus Einheiten der Formel

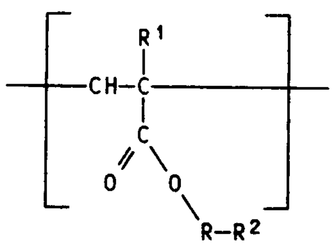

(I)

aufgebaut sind oder die in der Kette Einheiten der Formel (I) enthalten.

In der Formel stehen

$R^1$ für Wasserstoff, Methyl oder Chlor,

R für einen sogenannten "Spacer", d.h. eine einen gewissen Abstand herstellende Gruppe und

$R^2$ für eine mesogene Gruppe.

Beispiele geeigneter Reste R (Spacer) sind

$-(CH_2)_2-$, $-(CH_2)_3-$ $-(CH_2)_4-$, $-(CH_2)_5-$, $-(CH_2)_6-$, $-(CH_2)_7-$, $-(CH_2)_8-$, $-(CH_2)_9$, $-CH_2)_{10}-$, $-(CH_2)_{11}$, $-(CH_2)_2-O-(CH_2)_2-$, $-(CH_2)_3-O-(CH_2)_2-$,

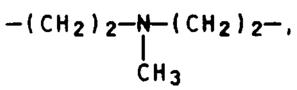, 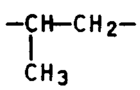 oder 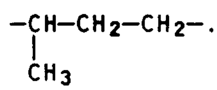.

Beispiele geeigneter Reste $R^2$ sind

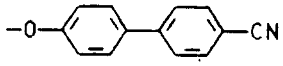, 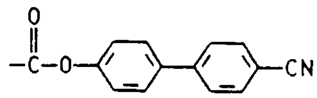, 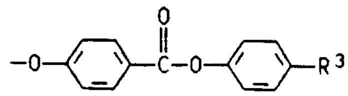,

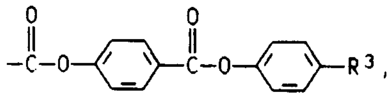, 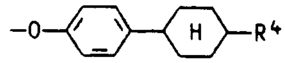, 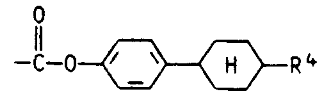,

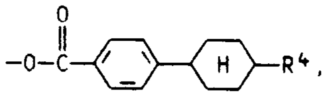, 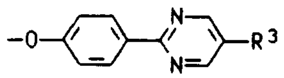, 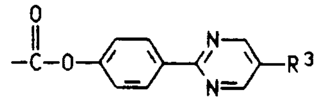,

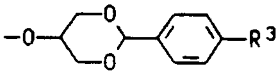 oder 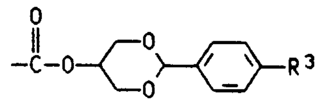

worin

$R^3$ $C_1$- bis $C_{12}$-Alkyl, $C_1$- bis $C_{12}$-Alkoxi, $C_1$- bis $C_{12}$-Alkoxicarbonyl, $C_1$-bis $C_{12}$-Alkanoyloxi, Fluor, Chlor, Cyan, 4-Cyanphenyl oder Nitro und

$R^4$ $C_1$- bis $C_{12}$-Alkyl bedeuten.

Weitere Beispiele besonders gut geeigneter Polymerisate mit seitenständigen mesogenen Gruppen sind solche, deren Ketten aus Einheiten der Formeln (I) und (II)

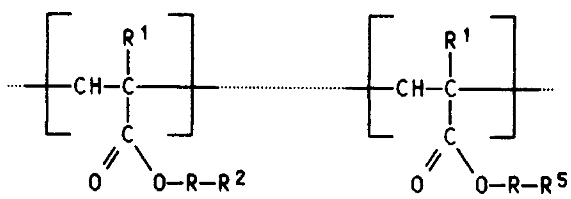

(I) (II)

aufgebaut sind oder die in der Polymerkette Einheiten der Formeln (I) und (II) enthalten, wobei in den Formeln

R, $R^1$ und $R^2$ die oben angegebene Bedeutung haben und

$R^5$ ein Farbstoff ist, der über -O-, -S- oder -N- an R gebunden ist.

Farbstoffreste $R^5$ sind z.B.:

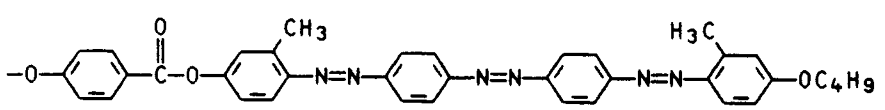,

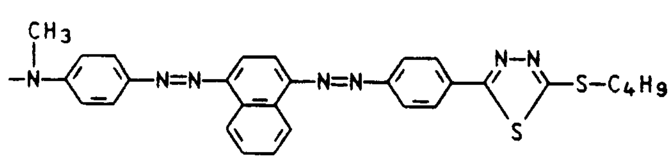,

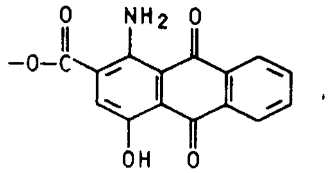

,

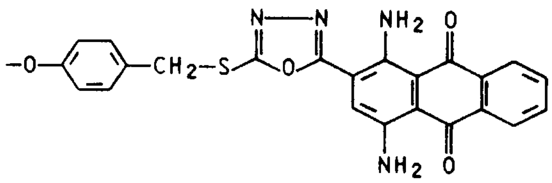

,

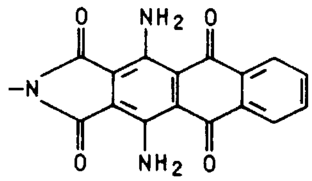

oder

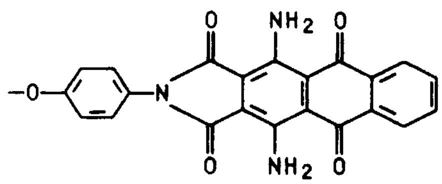

Weitere Beispiele besonders gut geeigneter Polymerisate mit seitenständigen mesogenen Gruppen sind solche, deren Polymerkette Einheiten der Formel

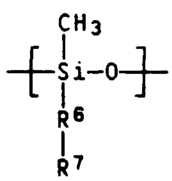

(VI)

enthält.

In der Formel stehen

$R^6$ für $-[CH_2]_n-$ mit n = 4-24 und

$R^7$ für einen Rest der Formeln

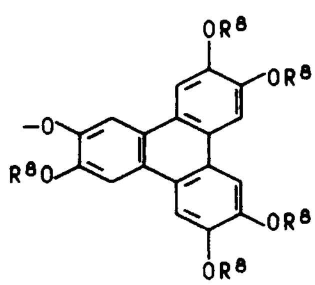

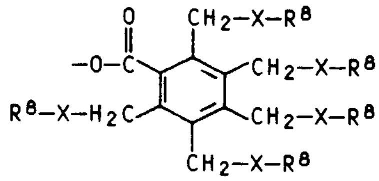

oder

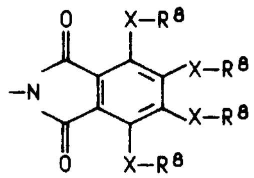

worin

X -O-, -S-,

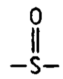 oder 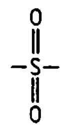

und

$R^8$ $C_1$- bis $C_{12}$-Alkyl bedeuten und wobei das Polymer gleiche oder verschiedene $R^7$ enthalten kann.

Weitere Beispiele besonders gut geeigneter Polymerisate sind solche, deren Polymerkette Einheiten der Formel

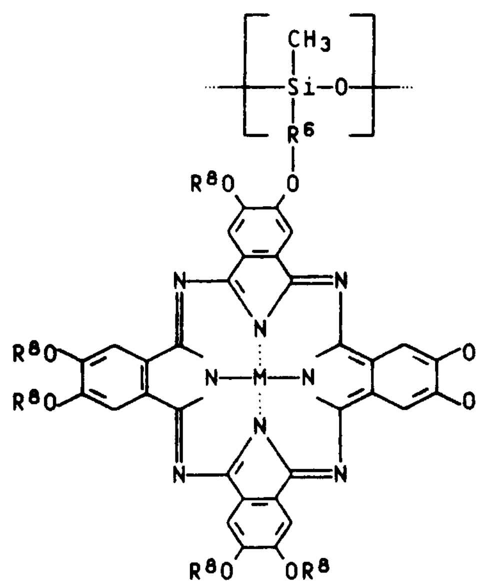

enthält, worin $R^6$ und $R^8$ die oben angegebene Bedeutung aufweisen und M für zwei Wasserstoffatome oder ein Metallion steht.

Die Aufzeichnungsschicht kann dichroitische und/oder nicht dichroitische Farbstoffe enthalten, wobei die dichroitischen bevorzugt sind.

Beispiele geeigneter dichroitischer Farbstoffe sind

Azofarbstoffe wie

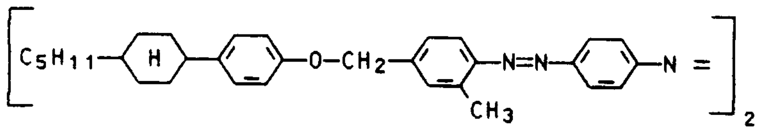 ,

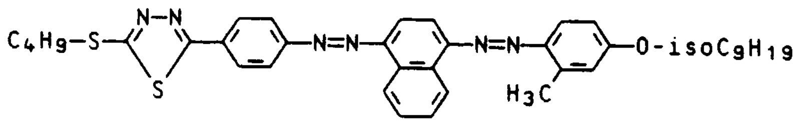 ,

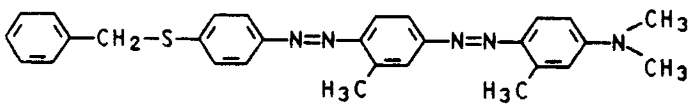 ,

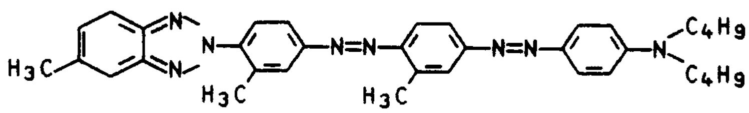 ,

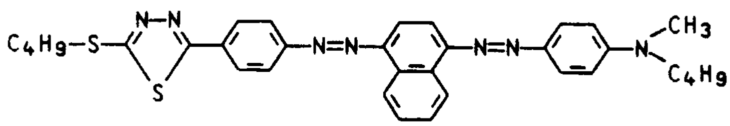 ;

Pervlenderivate wie

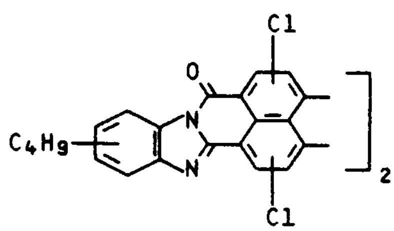 ;

Anthrachinonfarbstoffe wie

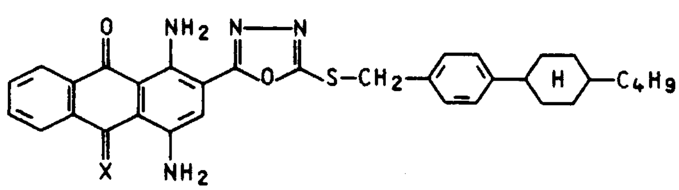

mit X = O, S;

Azulenfarbstoffe wie

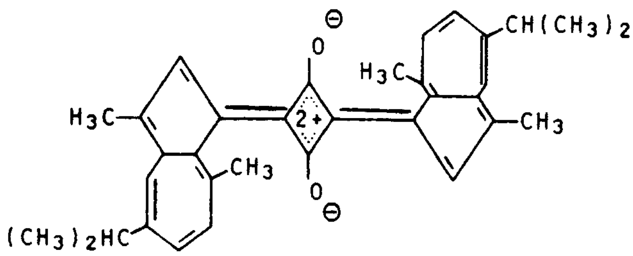 ;

Phthalocyanine wie

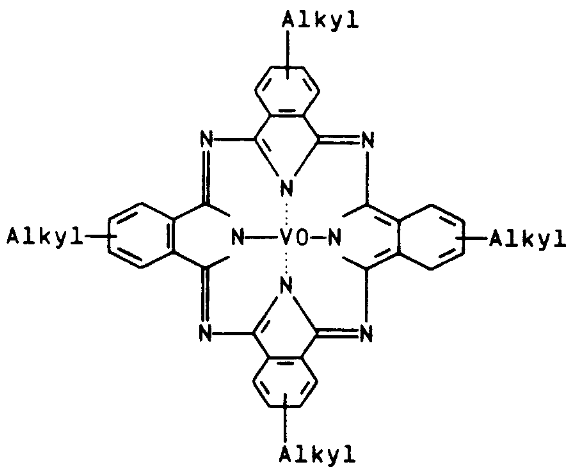

oder

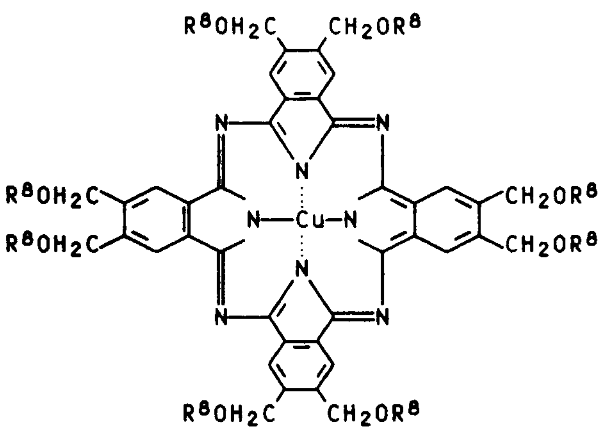

worin $R^8 = n\text{-}C_{12}H_{25}$ ;
oder

Metallkomplexe wie

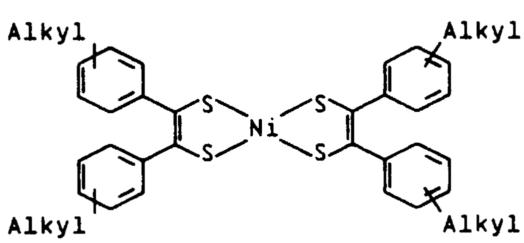 .

Darüber hinaus kann die Aufzeichnungsschicht molekulardispers verteilte geeignete Zusatzstoffe wie UV-Stabilisatoren, Antioxidantien oder Weichmacher enthalten.

Um für die Verwendung im erfindungsgemäßen Verfahren geeignet zu sein, muß die Aufzeichnungsschicht als Ganzes ein optisch positiv oder negativ einachsiges Medium darstellen, für dessen Brechungsindices

$n_1$ (senkrecht zur Aufzeichnungsschichtebene),
$n_2$ (in der Aufzeichnungsschichtebene, senkrecht zur optischen Hauptachse),
$n_3$ (in der Aufzeichnungsschichtebene, parallel zur optischen Hauptachse) und
$n_{iso}$ (Brechungsindex der thermisch veränderten Bereiche) mit

$$n_{iso} = 1/3\ (n_1 + n_2 + n_3)$$

für Licht der Wellenlänge $\lambda$ = 780 nm die Beziehungen
$n_1 = n_2 < n_3$ (optisch positiv einachsiges Medium)
oder
$n_1 = n_2 > n_3$ (optisch negativ einachsiges Medium)
gelten. Zugleich müssen für die Absolutbeträge der Differenzen zwischen den einzelnen Brechungsindices der Schicht die Beziehungen

$|\Delta n| = |n_3 - n_2| > 0{,}05$, vorzugsweise $>0{,}10$ und insbesondere $>0{,}15$, oder
$|\Delta n| = |n_{iso} - n_2 > 0{,}05$, vorzugsweise $>0{,}10$ und insbesondere $>0{,}15$, oder alternativ
$|\Delta n| = |n_{iso} - n_3| > 0{,}05$, vorzugsweise $>0{,}10$ und insbesondere $>0{,}15$

erfüllt sein. Außerdem muß die Aufzeichnungsschicht eine Dicke d von
$0{,}05\ \lambda'/|\Delta n|$ bis $0{,}6\ \lambda'\ |\Delta n|$, vorzugsweise von
$0{,}1\ \lambda'/|\Delta n|$ bis $0{,}35\ \lambda'/|\Delta n|$ und insbesondere
$0{,}15\ \lambda'/|\Delta n|$ bis $0{,}3\ \lambda'/|\Delta n|$
aufweisen, wobei $\lambda'$ die Wellenlänge des Leselaserstrahls bezeichnet.

Die stoffliche Zusammensetzung der Aufzeichnungsschicht ist daher weitgehend frei wählbar, solange die Schicht als Ganzes den vorstehend genannten Bedingungen genügt. Ob eine Schicht bestimmter Zusammensetzung für das erfindungsgemäße Verfahren geeignet ist, kann anhand einfacher Vorversuche festgestellt oder aufgrund der bekannten relevanten physikalischen Eigenschaften der in Frage kommenden Verbindungen abgeschätzt werden.

Die Herstellung geeigneter Aufzeichnungsschichten erfolgt nach den üblichen und bekannten Methoden der Herstellung dünner Schichten, beispielsweise durch Aufschleudern von Lösungen, welche die Komponenten der Schichten enthalten, auf geeignete Träger, durch das Eintauchen der Träger in solche Lösungen (dip coating), durch Aufrakeln oder durch Aufsprühen dieser Lösungen auf die Träger.

Die Herstellung der auf den Trägern befindlichen Orientierungsschichten aus Siliciumoxid erfolgt bekanntermaßen durch Aufdampfen unter einem geeigneten Winkel. Orientierungsschichten aus Polyimid werden in bekannter Weise durch das Auftragen der Polyimidvorstufe in Lösung, Trocknen der aufgetragenen Naßschicht, thermische Vernetzung der Trockenschicht und Anreiben erhalten.

Die Herstellung der Träger erfolgt nach üblichen und bekannten Methoden der Kunststoff-, Glas- oder Metallverarbeitung.

Die in bekannter Weise hergestellten, für das erfindungsgemäße Verfahren geeigneten Aufzeichnungsmaterialien werden mittels eines Schreiblaserstrahls mit analogen oder digitalen Daten beschrieben, wobei man zum Einschreiben analoger Daten bekanntermaßen einen intensitätsmodulierten Dauerstrichlaser und zum Einschreiben digitaler Daten einen impulskodierten Laser verwendet.

Im allgemeinen weisen geeignete Laser bei der Schreibwellenlänge $\lambda$ eine Strahlleistung von 5 bis 30 mWatt auf. Der Fokusdurchmesser des Schreiblaserstrahls liegt im allgemeinen bei 1 bis 3 $\mu$m. Vorteilhafterweise verwendet man zum Einschreiben einen Laserstrahl von Licht der Wellenlänge $\lambda_1$, welches von der betreffenden Aufzeichnungsschicht gut absorbiert wird. Vorteilhaft sind Wellenlängen $\lambda_1$ von 400 bis 1000 nm, insbesondere 630 bis 860 nm.

Beim Schreibvorgang wird der Schreiblaserstrahl in relativer Bewegung über das Aufzeichnungsmaterial hinweggeführt und trifft dabei senkrecht auf dieses auf, wobei er auf die Aufzeichnungsschicht fokussiert ist. An der Auftreffstelle wird die Aufzeichnungsschicht lokal erhitzt und es entstehen thermisch veränderte Bereiche. In diesen Bereichen ist die Aufzeichnungsschicht nicht mehr länger homogen-planar orientiert, sondern optisch isotrop. Beim Einschreiben von Daten mit impulskodierten Lasern haben diese Bereiche die Form von runden oder nahezu runden Flecken (spots), beim Einschreiben mit einem Dauerstrichlaser

können sie beliebige Formen haben.

In erfindungsgemäßer Verfahrensweise werden Aufzeichnungsschichten, welche orientierte dichroitische farbgebende Komponenten enthalten, so mit einem Schreiblaserstrahl der Wellenlänge $\lambda_1$ beschrieben, daß die Ebene seiner Polarisation $\vec{E}$ beim Auftreffen auf die Aufzeichnungsschicht mit dem Übergangsdipolmoment $\vec{\mu}$ der orientierten dichroitischen Komponenten einen Winkel $\Theta'$ zwischen -45° und +45° bildet, wobei ein Winkel zwischen -20° und +20° bevorzugt und ein Winkel zwischen -10° und +10° besonders bevorzugt ist.

Die eingeschriebenen Daten werden mit Hilfe eines Leselaserstrahls gelesen. Die Strahlleistung des Lasers bei der Lesewellenlänge $\lambda'$ liegt unterhalb der Schwellenleistung, ab der ein Schreiben möglich wird. Im allgemeinen liegt die Strahlleistung bei 0,1 bis 2 mWatt. Vorteilhafterweise verwendet man Laserlicht der Wellenlänge $\lambda_1'$, welches von der Aufzeichnungsschicht gut absorbiert wird, oder solches der Wellenlänge $\lambda_2'$, welches nur schlecht oder gar nicht absorbiert wird. Vorteilhaft sind Wellenlängen $\lambda_1'$ oder $\lambda_2'$ von 400 bis 1000 nm, insbesondere 630 bis 860 nm.

Auch beim Lesevorgang wird der Leselaserstrahl in relativer Bewegung über das Aufzeichnungsmaterial hinweggeführt und trifft senkrecht auf dieses auf, wobei er auf die Aufzeichnungsschicht fokussiert ist.

In erfindungsgemäßer Verfahrensweise wird der Leselaserstrahl dabei längs der optischen Hauptachse der Aufzeichnungsschicht oder senkrecht dazu über das Aufzeichnungsmaterial hinweggeführt und er wird so eingestrahlt, daß die Ebene seiner Polarisation $\vec{E}$ beim Auftreffen auf die Aufzeichnungsschicht mit deren optischer Hauptachse einen Winkel $\Theta$ von 0°±10°, 45° ± 10° oder 90° ± 10° bildet.

Trifft der Leselaserstrahl beim Überstreichen der Aufzeichnungsschicht auf einen thermisch veränderten Bereich, so ändern sich die Eigenschaften des von dem Aufzeichnungsmaterial transmittierten oder reflektierten Lichts, was mit Hilfe geeigneter Detektoren nachgewiesen werden kann.

In erfindungsgemäßer Verfahrensweise werden hierbei die Daten über den polarisationsoptischen Kontrast zwischen den thermisch veränderten und den unveränderten Bereichen gelesen.

In einer weiteren erfindungsgemäßen Verfahrensweise werden die Daten über die Interferenz derjenigen Lichtwellen gelesen, welche sich aus den Laserlichtwellen mit gaußförmiger Intensitätsverteilung aufgrund der unterschiedlichen Phasengeschwindigkeit des Lichts im Zentrum thermisch veränderter Bereiche einerseits und ihrer thermisch unveränderten Umgebung andererseits bilden. Ein Aufzeichnungsmaterial, das in dieser Weise gelesen werden kann, wird allgemein als "phase shift"-Speichermedium bezeichnet.

Von besonderem Vorteil ist hierbei das Auslesen der Daten über den Doppelbrechungskontrast. Hierzu strahlt man einen Leselaserstrahl von Licht der Wellenlänge $\lambda_2'$ so ein, daß die Ebene seiner Polarisation $\vec{E}$ beim Auftreffen auf die Aufzeichnungsschicht mit deren optischer Hauptachse einen Winkel $\Theta$ von 45° ± 10° bildet. Wird hierbei das von dem Aufzeichnungsmaterial transmittierte Licht analysiert, dann verwendet man Laserlicht einer Wellenlänge $\lambda_2'$ von

$1{,}66\ d\ |\Delta n|$ bis $5\ d\ |\Delta n|$,

wobei d gleich der Dicke der Aufzeichnungsschicht und $\Delta n$ gleich $n_3$-$n_2$ ist. Wird dagegen das von einer hinter der Aufzeichnungsschicht angebrachten Reflektorschicht reflektierte Licht analysiert, so verwendet man Laserlicht einer Wellenlänge $\lambda_2'$ von

$3{,}33\ d\ |\Delta n|$ bis $20\ d\ |\Delta n|$.

Liegt die Wellenlänge $\lambda_2'$ aufgrund technischer Rahmenbedingungen bereits von vornherein fest, dann ist die Dicke d der Aufzeichnungsschicht so zu wählen, daß die genannten Bedingungen erfüllt sind.

Enthält die Aufzeichnungsschicht homogen-planar orientierte dichroitisch farbgebende Komponenten, dann ist es erfindungsgemäß von besonderem Vorteil die Daten über den Dichroismuskontrast auszulesen. Hierzu strahlt man einen Leselaserstrahl von Licht der Wellenlänge $\lambda_1'$ so ein, daß die Ebene seiner Polarisation $\vec{E}$ beim Auftreffen auf die Aufzeichnungsschicht mit dem Übergangsdipolmoment $\vec{\mu}$ der orientierten dichroitischen Komponenten einen Winkel $\Theta'$ von 0° ± 10° oder 90° ± 10°, insbesondere 90° ± 10°, bildet.

Zum erfindungsgemäßen Auslesen der Daten über die Interferenz von Lichtwellen, d.h. die Verwendung des Aufzeichnungsmaterials als "phase shift"-Speichermedium, wird ein Leselaserstrahl von Licht der Wellenlänge $\lambda_2'$ und eine Aufzeichnungsschicht der Dicke d von

$0{,}05\ \lambda_2'/|\Delta n|$ bis $0{,}6\ \lambda_2'/|\Delta n|$, vorzugsweise $0{,}1\ \lambda_2'/|\Delta n|$ bis
$0{,}35\ \lambda_2'/|\Delta n|$ und insbesondere $0{,}15\ \lambda_2'/|\Delta n|$ bis $0{,}3\ \lambda_2'/|\Delta n|$

verwendet, wobei $|\Delta n|$ gleich $|n_{iso}-n_2|$ oder gleich $|n_{iso}-n_3|$ ist. Liegt die Schichtdicke d bereits von vornherein fest, dann ist die Wellenlänge $\lambda_2'$ so zu wählen, daß sie für den Fall, daß das transmittierte Licht analysiert wird, der Bedingung

$$\lambda_2' = 1{,}66\ d \bullet |\Delta n|\ \text{nm bis}\ 5\ d\ |\Delta n|\ \text{nm}$$

und für den Fall, daß das reflektierte Licht analysiert wird, der Bedingung

$\lambda_2' = 3{,}33\ d \bullet |\Delta n|$ nm bis $20\ d\ |\Delta n|$ nm

genügt. Es ist indes von Vorteil die Schichtdicke d der Wellenlänge $\lambda_2'$ anzupassen. Der Leselaserstrahl wird hierbei so eingestrahlt, daß die Ebene seiner Polarisation $\vec{E}$ beim Auftreffen auf die Aufzeichnungsschicht mit deren optischer Hauptachse einen Winkel $\Theta$ von $0° \pm 10°$ oder $90° \pm 10°$ bildet.

Enthält die Aufzeichnungsschicht hierbei noch homogen-planar orientierte dichroitische farbgebende Komponenten, dann können die Daten zugleich über die Interferenz der Lichtwellen und den Dichroismuskontrast ausgelesen werden. Hierzu verwendet man zwei Leselaserstrahlen von Licht der Wellenlänge $\lambda_1'$ und $\lambda_2'$, die auf die selbe Stelle fokussiert sind. Dabei strahlt man den Laserstrahl der Wellenlänge $\lambda_1'$ so ein, daß die Ebene seiner Polarisation $\vec{E}$ beim Auftreffen auf die Aufzeichnungsschicht mit dem Übergangsdipolmoment $\vec{\mu}$ der dichroitischen Komponenten einen Winkel $\Theta'$ von $0° \pm 10°$ bis $90° \pm 10°$ bildet, und den Leselaserstrahl der Wellenlänge $\lambda_2'$ strahlt man so ein, daß die Ebene seiner Polarisation $\vec{E}$ beim Auftreffen auf die Aufzeichnungsschicht mit deren optischer Hauptachse einen Winkel $\Theta$ von $0° \pm 10°$ oder $90° \pm 10°$ bildet. Ist die Dicke d der Aufzeichnungsschicht von vornherein festgelegt, dann müssen die Wellenlängen $\lambda_1'$ und $\lambda_2'$ nach den vorstehend angegebenen Bedingungen an die Schichtdicke angepaßt werden. Es ist indes von besonderem Vorteil, zwei nahe beieinander liegende Wellenlängen $\lambda_1'$ und $\lambda_2'$ zu wählen und die Schichtdicke gemäß den angegebenen Bedingungen angenähert anzupassen.

Für das erfindungsgemäße Verfahren ist es von ganz besonderem Vorteil, Schreib- und Leselaser zu verwenden, welche Laserstrahlung im Wellenlängenbereich von 630 bis 860 nm ausstrahlen. Dabei ist es außerdem von ganz besonderem Vorteil, wenn die Schreibwellenlänge $\lambda_1$ mit der Lesewellenlänge $\lambda_1'$ identisch ist oder sich die Lesewellenlänge $\lambda_2'$ um nicht mehr als $\Delta\lambda' = 200$ nm, vorzugsweise 180 nm und insbesondere 150 nm davon unterscheidet. Die üblichen und bekannten Halbleiter- und Gaslaser emittieren in diesem Bereich. Demgemäß liegen die Dicke d der für das erfindungsgemäße Verfahren ganz besonders vorteilhaften Aufzeichnungsschichten unterhalb 5 $\mu$m, vorzugsweise unterhalb 2,5 $\mu$m und insbesondere unterhalb 1,5 $\mu$m.

Das erfindungsgemäße Verfahren weist gegenüber dem Stand der Technik zahlreiche Vorteile auf. So kann es jederzeit in einfacher Weise vorgegebenen technischen Rahmenbedingungen angepaßt werden, ohne daß dabei die anderen Vorteile verlorengehen. Außerdem können Fehlinformationen in einfacher Weise entdeckt werden, indem man ein und dasselbe Aufzeichnungsmaterial nach unterschiedlichen erfindungsgemäßen Verfahrensweisen liest und darauf achtet, ob dabei Diskrepanzen auftreten. Das erfindungsgemäße Verfahren führt zu einer sehr viel höheren Empfindlichkeit beim Schreiben und zu einem außergewöhnlich hohen optischen Kontrast beim Lesen. Es können daher mehrschichtige, flächenförmige, laseroptische Aufzeichnungsmaterialien mit Aufzeichnungsschichten auf der Basis homogen-planar orientierter flüssigkristalliner Verbindungen schneller und mit geringerer Fehlerrate beschrieben und gelesen werden als durch Verfahren des Standes der Technik.

Das erfindungsgemäße Verfahren kann mit Hilfe bekannter laseroptischer Geräte durchgeführt werden. Es ist jedoch von besonderem Vorteil, wenn hierzu die erfindungsgemäßen laseroptischen Schreib- und Lesegeräte verwendet werden. Von ganz besonderem Vorteil ist es, das erfindungsgemäße Verfahren mit Hilfe der erfindungsgemäßen laseroptischen Schreib- und Lesegeräte an den erfindungsgemäßen, mehrschichtigen, laseroptischen Datenplatten auszuführen.

Die erfindungsgemäßen laseroptischen Schreib- und Lesegeräte entsprechen in Aufbau und Funktion den vom Stand der Technik her bekannten. Sie unterscheiden sich indes von letzteren durch die folgenden Merkmale: Ihr laseroptischer Schreib- und Lesekopf ist um die optische Achse, welche durch die Ausbreitungsrichtung des Laserstrahls definiert ist, in einem Winkel von 0° bis 90° drehbar gelagert, wobei Vorrichtungen zur Arretierung des Kopfes bei 0°, 45° und 90° vorgesehen sind. Die Lagerung des Kopfes erfolgt dabei in üblicher und bekannter Weise beispielsweise mit Hilfe eines drehbaren Widerlagers. Geeignete Vorrichtungen für die Arretierung bei einem bestimmten Winkel sind in ihren Konstruktionsmerkmalen ebenfalls bekannt.

Bei diesem Schreib- und Lesekopf kann außerdem für den Fall, daß lediglich über den Doppelbrechungskontrast gelesen werden soll, eine $\lambda$/4-Platte im Strahlengang des Lasers entfallen.

Ein zusätzliches oder alternatives unterscheidendes Merkmal ist, daß sich im Strahlengang zwischen dem Polarisationsstrahlteiler und der Aufzeichnungsschicht zusätzlich zur $\lambda$/4-Platte noch eine $\lambda$/2-Platte befindet. Dabei ist die $\lambda$/4-Platte und/oder die $\lambda$/2-Platte in einem Winkel von 0° bis ± 45° zur Polarisationsebene $\vec{E}$ des emittierten, linear polarisierten Laserlichts drehbar gelagert, wobei übliche und bekannte Vorrichtungen zu deren Arretierung bei 0°, ± 22,5° und ± 45° vorgesehen sind.

Die erfindungsgemäßen laseroptischen Schreib- und Lesegeräte können demnach Schreib- und Leseköpfe enthalten, welche entweder alle beide unterscheidenden Merkmale oder nur eines der beiden aufweisen.

Die erfindungsgemäßen laseroptischen Schreib- und Lesegeräte weisen gegenüber dem Stand der Technik zahlreiche Vorteile auf. So ist der Winkel zwischen der Ebene der Polarisation $\vec{E}$ der vom laseroptischen Kopf ausgestrahlten Laserstrahlen und der Datenspur nicht länger unveränderlich festgelegt, sondern kann in gewünschter Weise dem Schreib- und/oder Leseverfahren angepaßt werden. Dadurch läßt sich das erfindungsgemäße Verfahren besonders rationell und vorteilhaft durchführen, wobei sich auch noch sämtliche erfindungsgemäßen Varianten mit Hilfe ein und desselben Gerätes ausführen lassen. Darüber hinaus besteht sogar noch die Möglichkeit, zwei Verfahrensvarianten gleichzeitig durchzuführen.

Die erfindungsgemäßen mehrschichtigen laseroptischen Datenplatten enthalten im wesentlichen einen dimensionsstabilen Träger, eine Orientierungsschicht und die Aufzeichnungsschicht. Darüber hinaus können sie weitere geeignete Schichten wie Reflektorschichten, Elektrodenschichten, Reflektor-Absorberschichten und Schutzschichten enthalten.

Besonders vorteilhafte Datenplatten bestehen aus einem Träger, einer Orientierungsschicht, der Aufzeichnungsschicht und einer Reflektor- oder einer Reflektor-Absorberschicht, wobei die Schichten in der angegebenen Reihenfolge übereinander liegen.

Beispiele geeigneter dimensionsstabiler Träger und Orientierungsschichten sind die vorstehend genannten.

Die stoffliche Zusammensetzung der Aufzeichnungsschichten ist die gleiche wie bei den vorstehend beschriebenen Aufzeichnungsschichten, wobei Aufzeichnungsschichten auf der Basis flüssigkristalliner Polymerisate mit seitenständigen mesogenen Gruppen vorteilhaft und solche auf Basis flüssigkristalliner Polymerisate mit seitenständigen mesogenen Gruppen und homogen-planar orientierten, dichroitischen farbgebenden Komponenten besonders vorteilhaft sind.

Die Aufzeichnungsschichten der erfindungsgemäßen Datenplatten enthalten die flüssigkristallinen Verbindungen sowie gegebenenfalls die dichroitisch farbgebenden Komponenten in homogen-planarer und radialer oder in homogen-planarer und tangentialer Orientierung. Sie stellen optisch positive oder negative einachsige Medien dar, für deren Brechungsindices $n_1$, $n_2$, $n_3$ und $n_{iso}$ für Licht der Wellenlänge $\lambda = 780$ nm die Bedingungen

$n_1 = n_2 < n_3$ (optisch positiv einachsiges Medium) oder
$n_1 = n_2 > n_3$ (optisch negativ einachsiges Medium)

gelten. Zugleich müssen für die Absolutbeträge der Differenzen zwischen den einzelnen Brechungsindices der Schicht die Beziehungen

$|\Delta n| = |n_3 - n_2| > 0{,}05$, vorzugsweise $> 0{,}1$, insbesondere $> 0{,}15$, oder
$|\Delta n| = |n_{iso} - n_2| > 0{,}05$, vorzugsweise $> 0{,}1$, insbesondere $> 0{,}15$ oder alternativ
$|\Delta n| = |n_{iso} - n_3| > 0{,}05$, vorzugsweise $> 0{,}1$, insbesondere $> 0{,}15$

erfüllt sein. Außerdem muß die Aufzeichnungsschicht eine Dicke d von

$0{,}05\ \lambda'/|\Delta n|$ bis $0{,}6\ \lambda'/|\Delta n|$, bevorzugt von $0{,}1\ \lambda'/|\Delta n|$ bis $0{,}35\ \lambda'/|\Delta n|$ und insbesondere von $0{,}15\ \lambda'/|\Delta n|$ bis $0{,}3\ \lambda'/|\Delta n|$

aufweisen, wobei $\lambda'$ die Wellenlänge des Leselaserstrahls bezeichnet.

Die stoffliche Zusammensetzung der Aufzeichnungsschicht ist daher auch hier weitgehend frei wählbar, solange die Schicht als Ganzes den vorstehend genannten Bedingungen genügt. Ob eine Schicht bestimmter Zusammensetzung für die erfindungsgemäße laseroptische Datenplatte geeignet ist, kann anhand einfacher Vorversuche festgestellt oder aufgrund der bekannten relevanten physikalischen Eigenschaften der in Betracht kommenden Verbindungen abgeschätzt werden.

Beispiele geeigneter Reflektor- oder Reflektor-Absorberschichten sind die vorstehend genannten.

Die Herstellung dieser mehrschichtigen laseroptischen Datenplatten erfolgt nach den bereits genannten üblichen und bekannten Methoden.

Die Datenplatten können in bekannter Weise unter Zuhilfenahme bekannter Geräte beschrieben und gelesen werden.

Erfindungsgemäß ist es indes von ganz besonderem Vorteil, wenn diese Datenplatten nach dem erfindungsgemäßen Verfahren in den erfindungsgemäßen laseroptischen Schreib- und Lesegeräten beschrieben und gelesen werden, wobei man die Schreib- und Leselaserstrahlen in relativer Bewegung längs einer Kreis- oder Spiralbahn über die Datenplatten hinwegführt.

Die erfindungsgemäßen mehrschichtigen laseroptischen Datenplatten weisen zahlreiche Vorteile auf. So können sie besonders schnell mit niedriger Laserleistung weitestgehend fehlerfrei beschrieben und gelesen

werden. Sie weisen im beschriebenen Zustand einen besonders hohen optischen Kontrast auf und sind ausgesprochen stabil, so daß auch bei längerer Lagerung kein Informationsverlust eintritt. Darüber hinaus sind sie in einfacher Weise herstellbar. Hinzu kommt noch, daß sie sich hervorragend für die Durchführung des erfindungsgemäßen Verfahrens mit Hilfe der erfindungsgemäßen laseroptischen Schreib- und Lesegeräte eignen. Außerdem können die Datenplatten gelöscht und wieder beschrieben werden.

Durch die erfindungsgemäße Abstimmung eines laseroptischen Schreib- und Leseverfahrens auf ein laseroptisches Gerät zur Durchführung dieses Verfahrens und eine laseroptische Datenplatte resultiert ein integriertes System zur laseroptischen Datenverarbeitung, welches besondere technische Effekte im Vergleich zum Stand der Technik aufweist. So ist neben der höheren Schreib- und Lesegeschwindigkeit, der höheren Empfindlichkeit, der niedrigeren Fehlerrate und der Anpassungsfähigkeit an vorgegebene technische Rahmenbedingungen vor allem die Möglichkeit, Fehlinformationen in einfacher Weise zu identifizieren, hervorzuheben.

Das erfindungsgemäße integrierte System zur laseroptischen Datenverarbeitung ist daher für zahlreiche Anwendungszwecke geeignet, beispielsweise für die digitale oder analoge Aufzeichnung audio-visueller Informationen, als Datenspeicher für Computer oder zur Archivierung von Datensätzen.

Beispiel 1

Für die Beispiele und die Vergleichsversuche wurde zunächst ein Polymerisat mit seitenständigen mesogenen Gruppen hergestellt, dessen Polymerkette aus 80 Gew.% an Einheiten, die der allgemeinen Formel (I) entsprechen, und aus 20 Gew.% an Einheiten, die der allgemeinen Formel (II) entsprechen, aufgebaut ist.

80 Gew.%

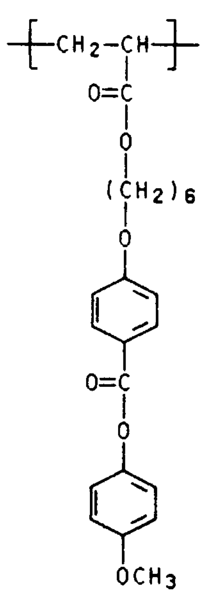

(I)

20 Gew.%

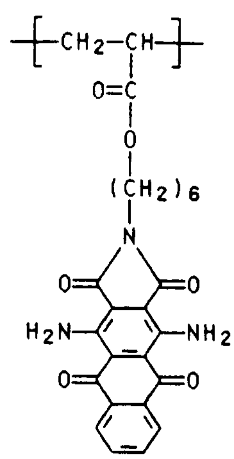

(II)

Dieses Polymerisat (I,II) wurde beispielhaft für die Herstellung der homogen-planar orientierte flüssigkristalline Verbindungen enthaltenden, thermisch veränderbaren Aufzeichnungsschicht von mehrschichtigen flächenförmigen Aufzeichnungsmaterialien und von erfindungsgemäßen laseroptischen Datenplatten verwendet.

Herstellvorschrift

100 g der entsprechenden Mischung aus 80 Gew.% des Acrylatmonomeren (I) und 20 Gew.% des Acrylatmonomeren (II) wurden in 1000 ml absolutem Tetrahydrofuran gelöst und mit 0,5 g Azoisobutyronitril (AIBN) versetzt. Die Lösung wurde anschließend durch 30minütiges Hindurchleiten von Stickstoff entgast

und bei 70 °C während 48 Stunden polymerisiert. Das hierbei entstandene Polymerisat (I,II) wurde mit kaltem Diethylether ausgefällt, filtriert, in Methylenchlorid gelöst und erneut gefällt. Dies wurde so lange wiederholt, bis im Dünnschichtschromatogramm keine Monomeren mehr zu erkennen waren. Das so gereinigte Polymerisat (I,II) wurde im Ölpumpenvakuum bei 30 bis 40 °C getrocknet. Die Ausbeute lag bei 30 %, bezogen auf die Menge der Monomeren.

Die quantitative Bestimmung der Zusammensetzung der Polymerisats (I,II) erfolgte über UV-Spektroskopie und Elementaranalyse und stimmte mit der gewünschten Zusammensetzung überein.

Anwendungstechnisch relevante Eigenschaften des Polymerisats (I,II):

Das Absorptionsmaximum des Polymerisats (I,II) wurde an einer 860 nm dicken homogen-planar orientierten Schicht spektralphotometrisch gemessen.

Das optische Verhalten des flüssigkristallinen Polymerisats (I,II) wurde mit einem Polarisationsmikroskop der Firma Leitz, Modell Ortholux II Pol-BK, bestimmt. Die Probe wurde zwischen einem Objektträger und einem Deckglas präpariert und mit Hilfe eines Heiztisches der Firma Mettler, Modell FP 52, temperiert.

Die differentialkalorimetrische Untersuchung des Polymerisats wurde an einem Gerät der Firma Perkin Elmer, Modell DSC 2c, durchgeführt. Die Substanz (1-3 mg) wurde dabei in kleine Aluminiumpfännchen eingewogen und mit einem Deckel verschlossen. Vor der eigentlichen Messung wurde die Probe über den Schmelz- bzw. Klärpunkt aufgeheizt. Die Heizrate betrug 10 °C pro Minute. Die Auswertung der Meßdaten erfolgte mit Hilfe eines Rechners der Firma Dietz, Modell Micro 821. Die zugehörige Software wurde im Arbeitskreis von Prof. Kosfeld (Aachen/Duisburg) entwickelt.

Der Ordnungsgrad S wurde nach der bekannten Gleichung

$$S = \frac{CR-1}{CR+2}$$

bestimmt. Das dichroitische Verhältnis wurde in üblicher Weise durch Messung der Extinktion $E''$ (Messung mit parallel zur Vorzugsrichtung der flüssigkristallinen Phase, d.h. in Richtung der optischen Hauptachse polarisiertem Licht) und $E'$ (Messung mit senkrecht zur Vorzugsrichtung der flüssigkristallinen Phase polarisiertem Licht) nach der Beziehung

$$CR = \frac{E''}{E'}$$

ermittelt.

Der Gangunterschied Δl wurde mit Hilfe einer üblichen Meßanordnung aus einem Halbleiterlaser (λ = 780 nm), einem Polarisator, der Probe, einer λ/4-Platte, einem rotierenden Analysator, einem Detektor und einem Lock in-Verstärker bestimmt.

Der Absolutbetrag der Differenz der Brechungsindices

$$|\Delta n| = |n_3 - n_2|$$

wurde nach der Ermittlung des Gangunterschiedes Δl von 194 nm bei der Wellenlänge λ = 780 nm an einer 860 nm dicken homogen-planar orientierten Schicht des Polymerisats (I,II) nach der Beziehung

$$\Delta l = |\Delta n| \cdot d$$

berechnet.

Die Ergebnisse dieser Untersuchungen finden sich in der Tabelle 1.

Tabelle 1:
Anwendungstechnisch relevante Eigenschaften des Polymerisats (I,II)

| Eigenschaft | numerischer Betrag | |
|---|---|---|
| Absorptionsmaximum | $\lambda_{max}$ = 698 nm | |
| Phasenübergänge | glasig - smektisch A, | 41°C |
| | smektisch A - nematisch, | 88°C |
| | nematisch - isotrop, | 99°C |
| E" | 1,13 | |
| E' | 0,177 | |
| $CR = \frac{E''}{E'}$ | 6,38 | |
| $S = \frac{CR-1}{CR+2}$ | 0,64 | |
| $\lvert\Delta n\rvert = \lvert n_3-n_2\rvert$ für Licht der Wellenlänge $\lambda$ = 780 nm | 0,22 | |

Beispiel 2

Herstellung laseroptischer Datenplatten

Es wurden zwei Sätze von Datenplatten unterschiedlicher Spezifikation hergestellt. Dabei wurden die folgenden Methoden angewendet.

Methode A

Allgemeine Herstellvorschrift

Auf eine gereinigte, staubfreie Glasscheibe eines Durchmessers von 13 cm wurde eine 50 bis 100 nm dicke Orientierungsschicht aus Polyimid durch Naßbeschichtung (spin coating) mit einer 3 %igen Lösung eines Polyimidvorläufers (z.B. ®ZLI 2650 der Fa. Merck) und anschließendem Trocknen und Aushärten der Naßschicht bei 300°C aufgebracht. Danach wurde die Polyimidschicht unter Drehung der Glasplatte durch Anreiben mit Velour mit tangential verlaufenden, feinen Orientierungsrillen versehen.

Auf dieser Orientierungsschicht wurde die Aufzeichnungsschicht durch Naßbeschichtung (spin coating) mit einer 3 bis 30 %igen Lösung des Polymerisats (I,II) in 1,1,2-Trichlorethan oder Tetrachlorethylen, Trocknen der Naßschicht und Tempern der trocknen Schicht bei 100°C erzeugt. Durch das Tempern richten sich die mesogenen und dichroitischen Seitengruppen des Polymerisats (I,II) in homogen-planarer und tangentialer Orientierung aus. Die Dicke d der Aufzeichnungsschicht wurde über die Umdrehungsgeschwindigkeit der Glasscheibe bei der Naßbeschichtung und über die Konzentration der Polymerisatlösung eingestellt. Anschließend wurde die Aufzeichnungsschicht mit einer 100 nm dicken Reflektorschicht aus Aluminium bedampft.

Methode B

Allgemeine Herstellvorschrift

Dieses Verfahren zur Herstellung von laseroptischen Datenplatten unterschied sich von der Methode A lediglich dadurch, daß hierbei als Orientierungsschicht für die homogen-planare und tangentiale Orientierung eine Siliziumoxidschicht verwendet wurde.

Methode C

Allgemeine Herstellvorschrift

Dieses Verfahren unterschied sich von der Methode B lediglich dadurch, daß hierbei die Siliciumoxidschicht der homogen-planaren und radialen Orientierung der Aufzeichnungsschicht diente.

Die nach den Methoden A bis C hergestellten laseroptischen Datenplatten waren für das Lesen der eingeschriebenen Daten unter Reflektionsbedingungen gedacht. Für das Lesen wurden folgende Laserlichtwellenlängen $\lambda'$ von vornherein festgelegt:
$\lambda_1' = 633$ nm (Licht einer Wellenlänge $\lambda'$, welches von der Aufzeichnungsschicht stark absorbiert wird)
und
$\lambda_2' = 781$ nm (Licht einer Wellenlänge $\lambda'$, welches von der Aufzeichnungsschicht nur schlecht absorbiert wird);
so daß die Schichtdicke d der Aufzeichnungsschicht diesen Wellenlängen nach der Beziehung
$d = 0{,}05\ \lambda'/|\Delta n|$ bis $0{,}3\ \lambda'/|\Delta n|$
anzupassen war.

Die Tabelle 2 gibt eine Übersicht über die anwendungstechnisch relevanten Eigenschaften der hergestellten laseroptischen Datenplatten.

Aus den Werten der Tabelle 2 errechnete sich die Doppelbrechung der Aufzeichnungsschichten zu
$|\Delta n| = 0{,}209$ bis 0,22
und deren Dichroismus zu
$S = 0{,}62$ bis 0,65.

Datenplatten der Spezifikation 2.1 und 2.5 bis 2.8 waren bei der Verwendung von Licht der Wellenlänge $\lambda_1' = 633$ nm den erfindungsgemäßen Parametern weniger gut angepaßt als Datenplatten der Spezifikation 2.2 bis 2.4 sowie 2.9 und 2.10.

Bei Verwendung von Licht der Wellenlänge $\lambda_2' = 781$ nm waren Datenplatten der Spezifikation 2.1 und 2.6 bis 2.8 den erfindungsgemäßen Parametern weniger gut angepaßt als die Datenplatten 2.2 bis 2.5 sowie 2.9 und 2.10.

Tabelle 2

Laseroptische Datenplatten und ihre anwendungstechnisch relevanten Eigenschaften

| Datenplatte der Spezifikation Nr. | Herstellmethode | Schichtdicke d der Aufzeichnungsschicht (nm) | Gangunterschied $\Delta l$ bei 780 nm (nm) |
|---|---|---|---|
| 2.1 | A | 105 | 22 |
| 2.2 | A | 372 | 78 |
| 2.3 | A | 595 | 125 |
| 2.4 | A | 895 | 194 |
| 2.5 | A | 1050 | 222 |

Tabelle 2: Fortsetzung

| Datenplatte der Spezifikation Nr. | Herstellmethode | Schichtdicke d der Aufzeichnungsschicht (nm) | Gangunterschied $\Delta l$ bei 780 nm (nm) |
|---|---|---|---|
| 2.6 | A | 1340 | 285 |
| 2.7 | A | 1820 | 382 |
| 2.8 | A | 2620 | 548 |
| 2.9 | B | 900[a)] | 191 |
| 2.10 | C | 910[b)] | 188 |

a) homogen-planare und tangentiale Orientierung;
b) homogen-planare und radiale Orientierung

Beispiel 3

Die Durchführung des Verfahrens zur laseroptischen Datenaufzeichnung mit Hilfe der laseroptischen Datenplatten aus Beispiel 2

3.1 Die laseroptischen Schreib- und Lesegeräte

Für die Durchführung des Verfahrens wurden die bekannten laseroptischen Schreib- und Lesegeräte 1a und 4a sowie die erfindungsgemäßen Geräte 1b, 2, 3a, 3b, 4b, 5, 6a und 6b verwendet.
Die Geräte wiesen die folgenden Spezifikationen auf:

Gerät 1a (nicht erfindungsgemäß)

Schreib- und Lesekopf mit
- einem 10 mWatt-HeNe-Gaslaser, welcher Licht der Wellenlänge $\lambda_1$ und $\lambda_1'$ = 633 nm aussendete, wobei das Licht für das Schreiben der Daten mittels eines akustooptischen Modulators intensitätsmoduliert wurde und für das Lesen im Dauerstrichbetrieb in seiner Leistung auf 0,5 mWatt abgeschwächt wurde,
- einem Polarisationsstrahlteiler und
- einer $\lambda$/4-Platte zwischen Polarisationsstrahlteiler und Aufzeichnungsschicht.

Gerät 1b (erfindungsgemäß)

Schreib- und Lesekopf wie bei dem Gerät 1a mit dem Unterschied, daß die $\lambda$/4-Platte um die optische Achse drehbar war und bei einem Winkel von 0°, 45° und 90° zur Polarisationsebene $\vec{E}$ des emittierten linear polarisierten Laserlichts arretiert werden konnte.

Gerät 2 (erfindungsgemäß)

Schreib- und Lesekopf mit
- einem 10 mWatt-HeNe-Gaslaser wie bei dem Gerät 1a und
- einem nicht polarisierenden Strahlteiler

Der Kopf wies keine $\lambda$/4-Platte auf, er war aber um die optische Achse in einem Winkel von 0° bis 90° drehbar und konnte bei 0°, 45° und 90° arretiert werden.

Gerät 3a (erfindungsgemäß)

Schreib- und Lesekopf wie bei dem Gerät 2 mit dem Unterschied, daß ein Polarisationsstrahlteiler verwendet wurde.

Gerät 3b (erfindungsgemäß)

Schreib- und Lesekopf wie bei Gerät 3a, mit dem Unterschied, daß sich eine drehbare und bei einem Winkel von 0°, 22,5° und 45° arretierbare $\lambda/2$-Platte zwischen dem Polarisationsstrahlteiler und der Aufzeichnungsschicht befand.

Gerät 4a (nicht erfindungsgemäß)

Schreib- und Lesekopf wie bei dem Gerät 1a mit dem Unterschied, daß zusätzlich noch
- ein 5 mWatt-GaAlAs-Halbleiterlaser ($\lambda_2'$ = 781 nm) und
- ein dielektrischer Strahlteiler zum Zusammenführen der beiden Laserstrahlen

vorhanden war.

Gerät 4b (erfindungsgemäß)

Schreib- und Lesekopf wie bei dem Gerät 4a mit dem Unterschied, daß die $\lambda/4$-Platte um die optische Achse gedreht und bei einem Winkel von 0°, 45° und 90° zur Polarisationsebene $\vec{E}$ des emittierten linear polarisierten Lichts arretiert werden konnte.

Gerät 5 (erfindungsgemäß)

Schreib- und Lesekopf wie bei dem Gerät 2 mit dem Unterschied, daß zusätzlich noch
- ein 5 mWatt-GaAlAs-Halbleiterlaser ($\lambda_2'$ = 781 nm) und
- ein dielektrischer Strahlteiler zum Zusammenführen der beiden Laserstrahlen

vorhanden war.

Gerät 6a (erfindungsgemäß)

Schreib- und Lesekopf wie bei dem Gerät 3a mit dem Unterschied, daß zusätzlich noch
- ein 5 mWatt-GaAlAs-Halbleiterlaser ($\lambda_2'$ = 781 nm) und
- ein dielektrischer Strahlteiler

vorhanden war.

Gerät 6b (erfindungsgemäß)

Schreib- und Lesekopf wie bei dem Gerät 3b mit dem Unterschied, daß zusätzlich noch
- ein 5 mWatt-GaAlAs-Halbleiterlaser ($\lambda_2'$ = 781 nm) und
- ein dielektrischer Strahlteiler

vorhanden war.

Alle Geräte verfügten über die üblichen und bekannten optischen, elektrischen und mechanischen Vorrichtungen zur Fokussierung der Laserstrahlen auf die Aufzeichnungsschicht.

3.2 Die Versuchsdurchführungen

3.2.1 Die Bestimmung der Empfindlichkeit von Aufzeichnungsschichten aus dem Polymerisat (I,II)

Vor dem eigentlichen Beschreiben der laseroptischen Datenplatten wurde zunächst die Empfindlichkeit der Aufzeichnungsschichten aus dem Polymerisat (I,II) bestimmt. Maßgebend ist hierfür die kleinste Schwellenergiedichte $\rho_s$ (nJ/$\mu m^2$) des Laserlichts, mit welcher ein sauber ausgeprägter thermisch veränderter Bereich (spot) in den Aufzeichnungsschichten gerade noch erzeugt werden kann. Sie wurde wie folgt ermittelt:

Die homogen-planar und tangential orientierte Aufzeichnungsschicht einer Datenplatte der Spezifikation 2.4 (Beispiel 2, Tabelle 2) und die homogen-planar und radial orientierte Aufzeichnungsschicht einer Datenplatte

der Spezifikation 2.10 (Beispiel 2, Tabelle 2) wurden mit einem fokussierten gepulsten Farbstofflaserstrahl der Wellenlänge $\lambda$ = 633 nm und einer Impulsdauer von 15 ns bestrahlt. Hierbei erfolgte die Fokussierung des Laserstrahls mittels eines langbrennweitigen Objektivs. Der Winkel $\Theta'$ zwischen der Ebene der Polarisation $\vec{E}$ des Laserstrahls und der Übergangsdipolmoment $\vec{\mu}$ der orientierten dichroitischen Komponente des Polymerisats (I,II) wurde mittels einer $\lambda$/2-Platte auf bestimmte Werte zwischen 0° und 90° fest eingestellt. Durch Abschwächung der Energie des Laserstrahls wurden in den Schichten unterschiedlich große spots erzeugt, deren Durchmesser $\phi$ polarisationsmikroskopisch gemessen wurden. Die Quadrate der so ermittelten Durchmesser wurden als Funktion des Logarithmus naturalis der zugehörigen Gesamtenergien E (lnE) des Laserlichts aufgetragen. Aus den resultierenden Geraden im lnE/$\phi^2$-Diagramm wurden die Schwellenergiedichten $\rho_s$ für den Schreibvorgang ermittelt. Diese wurden bei beiden Datenplatten für jeden der fest eingestellten Winkel $\Theta'$ von 0°, 22,5°, 45°, 67,5° und 90° ermittelt. Die Versuchsergebnisse finden sich in der Tabelle 3.

Tabelle 3:

Schwellenergiedichte $\varrho_s$ (nJ/$\mu m^2$) der Aufzeichnungsschichten von Datenplatten der Spezifikation 2.4 und 2.10 (Beispiel 2, Tabelle 2) und ihre Abhängigkeit vom Winkel $\Theta'$

| Winkel $\Theta'$ (°) | Spezifikation 2.4 $\varrho_s$ (nJ/$\mu m^2$) | Spezifikation 2.10 $\varrho_s$ (nJ/$\mu m^2$) |
|---|---|---|
| 0 | 0,25 | 0,27 |
| 22,5 | 0,37 | 0,38 |
| 45 | 0,38 | 0,39 |
| 67,5 | 0,56 | 0,58 |
| 90 | 0,62 | 0,63 |

Die Versuchsergebnisse in Tabelle 3 zeigen, daß die laseroptischen Datenplatten gegenüber dem Schreiblaserstrahl dann eine besonders niedrige Schwellenergiedichte $\rho_s$ aufweisen, wenn der Winkel $\Theta'$ zwischen der Ebene der Polarisation $\vec{E}$ des Laserstrahls und dem Übergangsdipolmoment $\vec{\mu}$ der orientierten dichroitischen Komponente bei 0° liegt. Bei dieser Art der Bestrahlung wiesen die Datenplatten eine ganz besonders hohe Empfindlichkeit auf, die diejenige herkömmlicher laseroptischer Datenplatten auf der Basis flüssigkristalliner Aufzeichnungsschichten weit übertrifft. Dementsprechend können die erfindungsgemäßen Datenplatten besonders schnell mit Daten beschrieben werden.

3.2.2 Das Beschreiben der laseroptischen Datenplatten mit den laseroptischen Schreib- und Lesegeräten 1a bis 6b (s. Bsp. 3.1)

Ein Satz von Datenplatten der Spezifikation 2.1 bis 2.10 (Beispiel 2, Tabelle 2) wurde auf den laseroptischen Schreib- und Lesegeräten 1a bis 6b (s. 3.1) mit Daten in der Form von thermisch veränderten Bereichen (spots) beschrieben. Hierbei lag die Lichtleistung der HeNe-Schreiblaser stets bei 10 mWatt. Die Schreiblaserstrahlen wurden dabei in relativer Bewegung längs kreisförmiger Bahnen über die Datenplatten hinweggeführt und trafen senkrecht auf diese auf, wobei sie auf die jeweilige Aufzeichnungsschicht fokussiert waren.

Jede der Datenplatten der Spezifikation 2.1 bis 2.10 des ersten Datenplattensatzes wurde dabei mit allen Geräten 1a bis 6b nacheinander so beschrieben, daß jede Datenplatte neun konzentrisch angeordnete Ringe aus jeweils 500 Datenspuren aufwies. So wurde beispielsweise die Datenplatte 2.3 oder 2.4 wie folgt beschrieben: Ring 1 mit Gerät 1a, Ring 2 mit Gerät 1b, Ring 3 mit Gerät 2, Ring 4 mit Gerät 3a, Ring 5 mit Gerät 3b, Ring 6 mit Gerät 4a, Ring 7 mit Gerät 5, Ring 8 mit Gerät 6a, Ring 9 mit Gerät 6b. Dadurch

konnten zum einen die einzelnen Geräte und zum anderen die einzelnen Datenplatten in eindeutiger Weise jeweils untereinander genau verglichen werden.

Die Ergebnisse der Untersuchungen lassen sich wie folgt zusammenfassen:

Die Dauer des Laserpulses zur Erzeugung deutlicher spots war sowohl vom jeweils verwendeten Gerät als auch von der Einstellung der Gerätefreiheitsgrade abhängig. Unter Gerätefreiheitsgrad wird hier der Winkel verstanden, unter dem der gesamte Schreib- und Lesekopf oder die $\lambda/4$- oder $\lambda/2$-Platte relativ zur Aufzeichnungsschicht der Datenplatte steht. Dieser Winkel legt die Winkel $\Theta$ und $\Theta'$ fest.

Die höchsten Empfindlichkeiten, d.h. die kürzesten Laserpulszeiten zum Erzeugen gut lesbarer spots wurden mit den Datenplatten 2.1 bis 2.5, 2.9 und 2.10 erhalten, wogegen die Datenplatten 2.6 bis 2.8, welche dickere Aufzeichnungsschichten aufwiesen, weniger gute Ergebnisse lieferten. Dabei wurden die allerbesten Ergebnisse beim Schreiben mit den erfindungsgemäßen Geräten 1b, 2, 3a, 3b, 4b, 5, 6a und 6b erzielt, insbesondere dann, wenn der Gerätefreiheitsgrade optimal eingestellt waren, d.h. wenn der Winkel $\Theta'$ bei 0° lag. Dies wurde bei den Geräten 1b und 4b durch das Drehen der $\lambda/4$-Platte, in den Geräten 2, 3a, 5 und 6a durch das Drehen des gesamten Schreib- und Lesekopfes und bei den Geräten 3b und 6b durch das Drehen der $\lambda/2$-Platte erreicht.

Mit Hilfe der erfindungsgemäßen Geräte konnten bei einem Winkel $\Theta' = 0°$ bereits mit Laserpulsen von 250 ns bei 10 mWatt Lichtleistung gut lesbare spots erzeugt werden, wogegen bei anderen Winkeln $\Theta'$ eine höhere Pulsdauer hierfür notwendig war. So benötigte man bei einem Winkel $\Theta' = 45°$ ca. 600 ns bei 10 mWatt Lichtleistung und bei $\Theta' = 90°$ gar 1,5 $\mu$s bei 10 mWatt.

Wurden die üblichen und bekannten Geräte 1a und 4a verwendet, so war die Empfindlichkeit deutlich geringer; man benötigte im allgemeinen mehr als 600 ns bei 10 mWatt Lichtleistung.

Damit wird deutlich, welche besonderen Vorteile sich aus dem erfindungsgemäßen Verfahren ergeben, insbesondere dann, wenn es mit Hilfe der erfindungsgemäßen Geräte durchgeführt wird.

Nachdem die optimalen Schreibbedingungen festlagen, wurde der zweite Satz von Datenplatten der Spezifikation 2.1 bis 2.10 mit Hilfe des Geräts 3a mit Daten beschrieben. Dabei war es notwendig bei Datenplatten mit dicken Aufzeichnungsschichten die Laserpulsdauer zu erhöhen, um spots der gleichen Qualität und des gleichen Durchmessers wie bei Datenplatten mit dünneren Schichten zu erzeugen.

3.2.3 Das Lesen der laseroptischen Datenplatten mit den laseroptischen Schreib- und Lesegeräten 1a bis 6b (s. Beispiel 3.1)

Beim Lesen des gemäß 3.2.2 mit dem Gerät 2 beschriebenen zweiten Satzes von Datenplatten der Spezifikation 2.1 bis 2.10 (Beispiel 2, Tabelle 2) wurde der Leselaserstrahl in relativer Bewegung mit einer Lineargeschwindigkeit von 0.1 m/S. längs der Datenspur über die Datenplatten hinweggeführt und traf dabei senkrecht auf diese auf, wobei er auf deren Aufzeichnungsschicht fokussiert war. Die Lichtleistung betrug stets 0,5 mWatt, und es wurde immer das von den Datenplatten reflektierte Licht analysiert.

Das reflektierte Licht fiel auf einen sogenannten Array aus 4 Photodioden, deren Summensignal in üblicher und bekannter Weise verstärkt, gemessen und auf einem Oszilloskop sichtbar gemacht wurde.

Als Maß für die Wiedergabequalität diente zum einen die Höhe des Signals $U_o$, welche die Grundreflektivität der thermisch unveränderten Bereiche wiedergibt, und zum anderen die Höhe der Signaländerung oder des elektrischen Kontrastes $\Delta U$, welcher den Unterschied zwischen der Reflektivität der thermisch unveränderten Bereiche und derjenigen der thermisch veränderten Bereiche wiederspiegelt.

3.2.3.1 Das Lesen der eingeschriebenen Daten über den Dichroismuskontrast

In den thermisch veränderten Bereichen (spots) der Datenplatten war der Dichroismus der farbgebenden Komponente II im Polymer (I,II), Beispiel 1, vermindert oder gar ganz aufgehoben.

Für das Lesen der Datenspuren über den Dichroismuskontrast benötigte man einen Leselaser, welcher Licht der Wellenlänge $\lambda_1'$ emittierte, welches von den Aufzeichnungsschichten gut absorbiert wurde. Hierfür kommen vor allem die Geräte 1a, 1b, 2, 3a und 3b (vgl. Beispiel 3.1) in Betracht. Diese Geräte weisen jeweils nur einen Laser auf, welcher indes Licht der geeigneten Wellenlänge $\lambda_1 = 633$ nm ausstrahlte. Zu Lesezwecken wurde die Lichtleistung von ursprünglich 10 mWatt mittels Abschwächungsfilter auf 0,5 mWatt erniedrigt.

Der Vergleich der Geräte 1a (nicht erfindungsgemäß), 1b, 2, 3a und 3b (erfindungsgemäße Geräte) untereinander erfolgte an der unter optimalen Bedingungen ($\Theta' = 0°$) mit Hilfe des Gerätes 3a beschriebenen Datenplatte der Spezifikation 2.3 (Beispiel 2, Tabelle 2).

Die erhaltenen Ergebnisse lassen sich wie folgt zusammenfassen:

Die Geräte 1a und 1b erwiesen sich als ungeeignet für das Lesen der spots: stand nämlich die $\lambda/4$-Platte in

einem Winkel von 45° zur Polarisationsebene $\vec{E}$ des vom Laser emittierten linear polarisierten Lichts, so traf nur zirkular polarisiertes Licht auf die Datenplatte auf und es wurde kein Signal erhalten. Wurde dagegen bei dem Gerät 1b die λ/4-Platte auf einen Winkel von 0° oder 90° zur Polarisationsebene $\vec{E}$ des Laserlichts eingestellt, so wurde linear polarisiertes Licht von der λ/4-Platte durchgelassen, so daß man - wie bei den erfindungsgemäßen Geräten 2, 3a, 3b, 5, 6a und 6b aus Beispiel 3.1 - von vornherein auf die λ/4-Platte hätte verzichten können. Ein starkes Signal wäre mit Hilfe des Gerätes 1b nur dann zu erhalten gewesen, wenn dessen Schreib- und Lesekopf von vornherein so fixiert worden wäre, daß ein Winkel $\Theta'$ von 0° resultiert hätte. Dies war indes nicht der Fall, und eine nachträgliche Winkelkorrektur war wegen des starren Schreib- und Lesekopfes nicht möglich.

Auch die Geräte 3a und 3b waren für das Lesen der Daten über den Dichroismuskontrast ungeeignet. Zwar konnte der Winkel $\Theta'$ = 0° oder 90° durch Drehen des gesamten Schreib- und Lesekopfes (Gerät 3a) oder durch Drehen der λ/2-Platte (Gerät 3b) eingestellt werden, der in diesen Geräten enthaltene Polarisationsstrahlteiler lenkte indes das reflektierte Licht nicht zu den Detektoren, so daß kein Signal resultierte.

Demgegenüber war das Gerät 2 hervorragend zum Lesen des Dichroismuskontrastes bei Θ = 0° oder 90° geeignet. Der optimale Winkel konnte dabei durch das Drehen des gesamten Schreib- und Lesekopfes in einfacher Weise eingestellt werden. Als besonderer Vorteil erwies es sich, daß mit Hilfe des Geräts 2 eine Datenplatte mit sehr hoher Empfindlichkeit bei einem Winkel $\Theta'$ = 0° beschrieben und dann - nach Drehen des Kopfes um 90° - bei einem Winkel $\Theta'$ = 90° mit besonders gutem Kontrast und guter Grundreflektivität gelesen werden konnte. Unter Grundreflektivität ist hierbei die Reflektivität der unbeschriebenen Bereiche zu verstehen. Diese darf nicht zu gering sein, weil ansonsten die Autofokussier- und Spurlagenkorrektureinrichtungen des Gerätes ihre Funktion nicht mehr voll erfüllen.

Die übrigen Datenplatten würden daher mit dem Gerät 2 gelesen.

Die erhaltenen Ergebnisse lassen sich wie folgt zusammenfassen:

a) Lesen der Datenplatten bei einem Winkel von $\Theta'$ = 0°: Die Reflektivität der thermisch veränderten Bereiche (Grundreflektivität) war generell niedrig. Sie war indes im Falle von Daten platten der Spezifikation 2.1 bis 2.4 und 2.9 bis 2.10, Beispiel 2, Tabelle 2, hoch genug, so daß die Autofokussier- und Spurlagenkorrektureinrichtungenvoll funktionsfähig waren. Im Falle von Datenplatten der Spezifikation 2.5 bis 2.8 war die Grundreflektivität hierfür nicht mehr hoch genug.

Die Reflektivität der thermisch veränderten Bereiche war bei allen Datenplatten deutlich erhöht, was "helle" spots auf "dunklem" Hintergrund entsprach.

Einen besonders guten Kontrast wies beispielsweise die Datenplatte der Spezifikation 2.2 (d = 372 nm; $E''$ = 0,49; $E'$ = 0,076; CR = 6,44;

S = 0,64; $|\Delta n|$ = 0,2) auf, was ein besonders hohe positive Änderung des Photodiodensignals zur Folge hatte: $U_o$ = 0,12 V;

$\Delta U - U_{spot} - U_o = + 0{,}37$ V.

b) Lesen der Datenplatten bei einem Winkel von $\Theta'$ -= 90°:

Die Grundreflektivität aller Datenplatten war durchweg hoch, nahm aber bei wachsender Schichtdicke d von der Datenplatte der Spezifikation 2.1 zur Datenplatte der Spezifikation 2.9 hin kontinuierlich ab, so daß ab Schichtdicken von d > 100 nm (Spezifikation 2.5) die Autofokussier-und Spurlagenkorrrektureinrichtungen weniger gut ansprachen als bei Schichtdicken von d < 1000 nm.

Die Reflektivatät in den thermisch veränderten Bereichen war bei allen Datenplatten, insbesondere bei denjenigen mit Schichtdicken von d < 1000 nm deutlich erniedrigt, was "dunklen spots" auf hellen Hintergrund entsprach.

Einen besonders guten Kontrast wies beispielsweise die Datenplatte der Spezifikation 2.3 (d = 595 nm; E" = 1,54; $E'$ = 0,24; CR = 6,41; $|\Delta n|$ = 0,21) auf, was eine besonders starke negative Änderung des Photodiodensignals zur Folge hatte: $U_o$ = 0,76 V; ΔU = -0,45 V.

Das Lesen der Daten bei einem Winkel $\Theta'$ von 90° war somit wegen der höheren Grundreflektivität und dem daraus resultierenden besseren Ansprechen der Servoeinrichtungen von ganz besonderem Vorteil und ermöglichte höhere Drehzahlen des Plattenlaufwerks.

3.2.3.2. Das Lesen der Daten über den Doppelbrechungskontrast

In den thermisch veränderten Bereichen (spots) der Aufzeichnungsschichten war deren hohe Doppelbrechung vermindert oder gar ganz aufgehoben.

Für das Lesen über den Doppelbrechungskontrast kam sowohl Licht einer gut absorbierten Wellenlänge $\lambda_1'$ als auch solches einer nur schlecht absorbierten Wellenlänge $\lambda_2'$ in Betracht.

Indes waren bei der Verwendung der Lesewellenlänge $\lambda_1'$ = 633 nm sowohl das der Grundreflektivität entsprechende Signal $U_o$ als auch die dem optischen Kontrast entsprechende Signaländerung $\Delta U$ deutlich geringer als bei Verwendung einer Lesewellenlänge $\lambda_2'$. Die Geräte 1a, 1b, 2, 3a und 3b (s. Beispiel 3.1) waren daher für das Lessen über den Doppelbrechungskontrast von vornherein weniger gut geeignet als die anderen erfindungsgemäßen Geräte.

a) Der Vergleich der Geräte untereinander

Der Vergleich der Geräte 4a, 4b, 5, 6a und 6b (s. Beispiel 3.1) erfolgte an einer Datenplatte der Spezifikation 2.4 (Beispiel 2, Tabelle 2) welche gemäß Beispiel 3.2.2 mit konzentrisch angeordneten Ringen aus jeweils 500 Datenspuren beschrieben worden war. Die Beobachtungen, welche beim Schreiben der Datenspuren mit den einzelnen Geräten gemacht wurden, werden im folgenden mitaufgeführt. Diese Beobachtungen bestätigten erneut die in Beispiel 3.2.2 zusammengefaßt dargestellten Ergebnisse.

Gerät 4a:

Mittels dieses "starren" Gerätes mit einer $\lambda/4$-Platte, welche in einem festen winkel von 45° zur Polarisationsebene $\vec{E}$ des emittierten laserstrahls stand, konnte die Datenplatte nur mit einer geringen Empfindlichkeit beschrieben werden (Pulsdauer: mindestens 600 ns), weil hierbei ausschließlich zirkular polarisiertes Laserlicht auf die Aufzeichnungsschicht auftraf.

Beim Lesen ($\lambda_2'$ = 781 nm) fand man eine niedrige Grundreflektivität ($U_o$ = 0,11 V) und deutlich positive Photodiodensignale ($\Delta U$ = +0,92 V), also "helle" spots auf "dunklem" Hintergrund.

Gerät 4b:

Für das Schreiben ($\lambda_1'$ = 633nm) wurde die $\lambda/4$-Platte in einem Winkel von 0° zur Polarisationsebene $\vec{E}$ des emittierten linear polarisierten Laserlichts arretiert, so daß nur linear polarisiertes Laserlicht auf die Aufzeichnungsschicht auftraf. Da indes die Polarisationsebene $\vec{E}$ des Laserlichts nicht in dem optimalen Winkel $\Theta'$ von 0° zu dem Übergangsdipolmoment $\vec{\mu}$ der orientierten dichroitischen farbgebenden Komponente I des Polymers (I, II) stand, wurde keine optimale Empfindlichkeit erzielt (Pulsdauer: 500 ns). Eine nachträgliche Korrektur der Stellung des Laserkopfes war nicht möglich.

Für das Lesen wurde die $\lambda/4$-Platte in einem winkel von 45° um die optische Achse gedreht, so daß - wie bei Gerät 4a - das Lesen mittels zurkular polarisiertem Licht erfolgte. Die resultierenden Photodiodensignale entsprachen daher auch denjenigen, welche mit Hilfe des Gerätes 4a erhalten wurden.

Gerät 5:

Wegen des polarisationsunabhängigen Strahlteilers konten die spots mit dem Gerät 5 nicht gelesen werden.

Gerät 6a:

Im Schreib- und Lesekopf war die Polarisationsebene $\vec{E}$ der beiden Laser parallel zur Ebene der 100 %igen Transmission des Polarisationsstrahlteilers orientiert. Für den Schreibvorgang wurde der gesamte Kopf durch Drehen um die optische Achse so orientiert, daß das Schreiblaserlicht unter dem winkel $\Theta'$ = 0° auf die Aufzeichnungsschicht auftraf. Die Schreibempfindlichkeit war sehr hoch. Es wurden bereits bei einer Pulsdauer von 250 ns sehr gut lesbare spots erhalten.

Für den Lesevorgang wurde der gesamte Kopf so gedreht, daß das linear polarisierte Leselaserlicht unter einem Winkel von $\Theta$ = 45° auf die Aufzeichnungsschicht auftraf. In dieser Weise wurde eine einer besonders hohen Grundreflektivität entsprechendes Signal $U_o$ von 1,18 V und eine einem hohen optischen Kontrast entsprechende Signaländerung $\Delta U$ von - 1,07 V erhalten.

Gerät 6b:

Bei diesem Gerät wurden die optimalen Bedingungen für das Schreiben ($\Theta'$ = 0°) und das Lesen ($\Theta$ = 45°) durch Drehen der $\lambda/2$-Platte eingestelt und es wurden im wesentlichen die gleichen Ergebnisse wie mit dem Gerät 6a erhalten.

Der Vergleich zeigte, daß die Geräte 6a und 6b die besten Ergebnisse lieferten, wobei die Geräte gleichwertig waren.

b) Die Abhängigkeit der Signalhöhe von Winkel Θ

Die Untersuchung der Abhängigkeit der Höhe des Photodiodensignals beim Lesevorgang vom Winkel Θ wurde mit dem Gerät 6a und dem ring 8 der Datenplatte durchgeführt. Die Versuchsergebnisse finden sich in der Tabelle 4.

Tabelle 4

Die Abhängigkeit der Signalhöhe vom Winkel Θ (Gerät 6a, Ring 8 der Datenplatte 2.4)

| Θ (°) | Grundreflektivität Photodiodensignal $U_0$ (V) | Höhe der durch den optischen Kontrast hervorgerufenen Signaländerung $\Delta U$ (V) |
|---|---|---|
| 0 | sehr gering | nicht lesbar |
| 22,5 | 0,52 | - 0,45 |
| 45 | 1,18 | - 1,07 |
| 90 | sehr gering | nicht lesbar |

Die Ergebnisse zeigen, daß eine hohe Grundreflektivität und ein hoher optischer Kontrast nur bei dem Winkel Θ = 45° resultierten.

c) Der Vergleich von Datenplatten der Spezifikation 2.1 bis 2.10 (Beispiel 2, Tabelle 2) untereinander

Auch dieser Vergleich wurde unter Verwendung des Gerätes 6a durchgeführt. Es wurden hierzu die gemäß 3.2.2 mit dem Gerät 2 unter optimalen Bedinungen beschriebenen Datenplatten des zweiten Datenplattensatzes verwendet, und es wurden die spots bei einem Winkel Θ von 45° gelesen.

Die Versuchsergebnisse finden sich in der Tabelle 5. Sie zeigen, daß die höchsten Grundreflektivitäten und optischen Kontraste bei den Datenplatten 2.4, 2.9 und 2.10 resultierten, wogegen Datenplatten mit dickeren oder dünneren Aufzeichnungsschichten weniger gute Ergebnisse lieferten.

Tabelle 5

Der Vergleich von Datenplatten der Spezifikation 2.1 bis 2.4, Beispiel 2, Tabelle 2, untereinander mittels des Gerätes 6a

| Datenplatte der Spezifikation Nr. | Grundreflektivität Photodiodensignal $U_0$ (V) | Höhe der durch den optischen Kontrast hervorgerufenen Signaländerung $\Delta U$ (V) |
|---|---|---|
| 2.1 | zu gering | nicht lesbar |
| 2.2 | 0,32 | - 0,28 |
| 2.3 | 0,61 | - 0,56 |
| 2.4 | 1,18 | - 1,07 |
| 2.5 | 0,88 | - 0,81 |
| 2.6 | 0,60 | - 0,55 |
| 2.7 | zu gering | nicht lesbar |
| 2.8 | 0,44 | - 0,40 |
| 2.9 | 1,16 | - 1,07 |
| 2.10 | 1,15 | - 1,06 |

3.2.3.3 Das Lesen unter Ausnutzung der Interferenz der Laserlichtwellen

Die thermisch veränderten Bereiche (spots) der Aufzeichnungsschichten wiesen einen anderen Brechungsindex ($n_{iso}$) auf als die thermisch univeränderten Bereiche ($n_1$, $n_2$, $n_3$). Die Ausbreitungsgeschwindigkeiten von Lichtwellen in diesen Bereichen war daher auch unterschiedlich. Deshalb waren bei einer Lichtwelle mit gaußförmiger Intensitätsverteilung diejenigen Anteile, welche sich in den thermisch veränderten Bereichen ausbreiteten, gegenüber denjenigen Anteilen, welche sich in den thermisch unveränderten Bereichen ausbreiteten, in ihrer Phase verschoben. Wenn nun der Leselaserstrahl auf einen spot auftraf, so kam es zu einer Schwächung der Intensität des reflektierten Lichts durch Interferenz seiner phasenverschobenen Anteile. Dies entsprach "dunklen" spots auf "hellem" Hintergrund.

Es wurden die gemäß Beispiel 3.2.2 mit dem Gerät 2 unter optimalen Bedingungen beschriebenen Datenplatten der Spezifikation 2.1 bis 2.8 (Beispiel 2, Tabelle 2) gelesen, d.h. diese Datenplatten wurden als "phase shift"-Speichermedien verwendet.

Der Vergleich der Geräte 1a, 1b, 2, 3a, 4a, 4b, 5, 6a und 6b (s. Beispiel 3.1) untereinander wurde anhand der Datenplatte 2.6 durchgeführt und ergab, daß sich vor allen die Geräte 5, 6a und 6b hier gut für das Lesen eigneten. Besonders gute Ergebnisse wurden mit Hilfe des Geräts 5 erhalten.

Der Vergleich der Datenplatten untereinander erfolgte daher mittels des Gerätes 5.

Die erhaltenen Ergebnisse finden sich in der Tabelle 6.

Sie zeigen, daß die Datenplatten unter einem Winkel Θ von 0° oder 90° gelesen werden konnten. Außerdem zeigen sie, daß bei den hier getesteten Datenplatten solche mit dünneren Aufzeichnungsschichten weniger gut als "phase shift" -Speichermedien geeignet waren als solche mit dickeren Schichten.

Tabelle 6

Lesen der Datenplatten der Spezifikation 2.1 bis 2.8 (Beispiel 2, Tabelle 2) unter Ausnutzung der Interferenz der Laserlichtwellen mit dem Gerät 5

| Datenplatte der | Winkel $\theta = 0^0$ | | Winkel $\theta = 90^0$ | |
|---|---|---|---|---|
| Spezifikation | $U_0$ | $\Delta U$ | $U_0$ | $\Delta U$ |
| Nr. | (V) | (V) | (V) | (V) |
| 2.1 | zu gering | nicht lesbar | zu gering | nicht lesbar |
| 2.2 | zu gering | nicht lesbar | zu gering | nicht lesbar |
| 2.3 | 0,26 | - 0,04 | zu gering | nicht lesbar |
| 2.4 | 0,24 | - 0,04 | 0,24 | - 0,02 |
| 2.5 | 0,25 | - 0,11 | 0,25 | - 0,04 |
| 2.6 | 0,24 | - 0,15 | 0,24 | - 0,08 |
| 2.7 | 0,24 | - 0,19 | 0,23 | - 0,12 |
| 2.8 | 0,25 | - 0,15 | 0,25 | - 0,13 |

## Patentansprüche

**1.** Laseroptisches Schreib- und Leseverfahren, bei dem die homogen-planar orientierte flüssigkristalline Verbindungen enthaltende, thermisch veränderbare Aufzeichnungsschicht eines mehrschichtigen, flächenförmigen Aufzeichnungsmaterials mittels eines Schreiblaserstrahls mit analogen oder digitalen Daten in Form von thermisch veränderten Bereichen beschrieben wird, wonach die eingeschriebenen Daten mittels eines Leselaserstrhls gelesen werden, wobei man das von dem Aufzeichnungsmaterial transmittierte oder reflektierte Licht analysiert, dadurch gekennzeichnet, daß man hierbei

a) die Daten über die Bestimmung des polarisationsoptischen Kontrastes zwischen den thermisch veränderten und den unveränderten Bereichen ausliest und/oder hierzu die Interferenz von Lichtwellen ausnutzt, welche sich aus den Laserlichtwellen mit gaußförmiger Intensitätsverteilung aufgrund der unterschiedlichen Phasengeschwindigkeit des Lichts im Zentrum thermisch veränderter Bereiche einserseits und ihrer thermisch unveränderten Umgebung andererseits bilden,

b) eine Aufzeichungsschicht verwendet, die ein optisch einachsiges Medium darstellt, für dessen Brechungsindices

$n_1$ (senkrecht zur Aufzeichnungsschichtebene),
$n_2$ (in der Aufzeichnungsschichtebene, senkrecht zur optischen Hauptachse),
$n_3$ (in der Aufzeichnungsschichtebene, parallel zur optischen Hauptachse) und
$n_{iso}$ (Brechungsindex der thermisch veränderten Bereiche) mit

$$n_{iso} = 1/3\ (n_1 + n_2 + n_3)$$

für Licht der Wellenlänge $\lambda = 780$ nm
die Beziehungen
$n_1 = n_2 < n_3$ oder
$n_1 = n_2 > n_3$
und

$|\Delta n| = |n_3 - n_2| > 0{,}05$ oder
$|\Delta n| = |n_{iso} - n_2| > 0{,}05$ oder alternativ
$|\Delta n| = |n_{iso} - n_3| > 0{,}05$

gelten, und die eine Dicke d von

$0,05\ \lambda'/|\Delta n|$ bis $0,6\ \lambda'/|\Delta n|$

hat, wobei $\lambda'$ = Wellenlänge des Leselaserlichts,

c) den Leselaserstarhl in relativer Bewegung in Richtung der optischen Hauptachse der Aufzeichnungsschicht oder senkrecht dazu über das Aufzeichnungsmaterial hinwegführt und dabei den Leselaserstrahl so einstrahlt, daß die Ebene seiner Polarisation $\vec{E}$ beim Auftreffen auf die Aufzeichnungsschicht mit deren optischer Hauptachse einen Winkel $\Theta$ von $0° \pm 10°$, $45° \pm 10°$ oder $90° \pm 10°$ bildet,

und

d) für den Fall, daß das transmittierte Licht analysiert wird, einen Laserstrahl von Licht der Wellenlänge $\lambda'$ von

$1,66\ d\ |\Delta n|$ bis $5\ d\ |\Delta n|$

und für den Fall, daß das reflektierte Licht analysiert wird, einen Laserstrahl von Licht der Wellenlänge $\lambda'$ von

$3,33d\ |\Delta n|$ bis $20\ d\ |\Delta n|$

verwendet.

**2.** Verfahren nach Anspruch 1, dadurch gekennzeichnet, daß man hierzu eine Aufzeichnungsschicht verwendet, die orientierte, dichroitische, farbgebende Komponenten enthält und den Schreiblaserstrahl so einstrahlt, daß die Ebene seiner Polarisation $\vec{E}$ beim Auftreffen auf die Aufzeichnungsschicht mit dem Übergangsdipolmoment $\vec{\mu}$ der orientierten dichroitischen Komponenten einen Winkel $\Theta'$ zwischen $-45°$ und $+45°$ bildet.

**3.** Laseroptisches Schreib- und Lesegerät für die Durchführung des Verfahrens nach Anspruch 1 oder 2, welches im wesentlichen einen Plattendrehteller und einen laseroptischen Schreib- und Lesekopf enthält, wobei der laseroptische Schreib- und Lesekopf eine Laserlichtquelle oder mehrere Laserlichtquellen für Laserlicht unterschiedlicher Wellenlängen und - im Strahlengang des Laserlichts - einen dielektrischen Strahlteiler zum Zusammenführen von Laserstrahlen unterschiedlicher Wellenlängen, einen Polarisationsstrahlteiler oder einen im wesentlichen nicht polarisierenden Strahlteiler sowie gegebenenfalls eine $\lambda/4$ Platte vorsieht, dadurch gekennzeichnet, daß

a) der laseroptische Schreib- und Lesekopf um die optische Achse, welche durch die Ausbreitungsrichtung des Laserlichts definiert ist, in einem Winkel von 0° bis 90° drehbar gelagert ist und daß Vorrichtungen zu seiner Arretierung bei 0°, 45° und 90° vorgesehen sind,

und/oder daß sich

b) im Strahlengang zwischen dem Polarisationsstrahlteiler oder dem im wesentlichen nicht polarisierenden Strahlteiler und der Aufzeichnungsschicht zusätzlich zur $\lambda/4$-Platte oder an ihrer Stelle eine $\lambda/2$-Platte befindet,

wobei

c) die $\lambda/4$- und/oder die $\lambda/2$-Platte um die optische Achse in einem Winkel von 0° bis ±45° zur Polarisationsebene $\vec{E}$ des emittierten linear polarisierten Laserlichts drehbar gelagert ist und daß Vorrichtungen zu ihrer Arretierung bei 0° ±22,5° und ±45° vorgesehen sind.

**4.** Mehrschichtige laseroptische Datenplatte für die Durchführung des Verfahrens nach Anspruch 1 oder 2 mit einer Trägerschicht, mindestens einer Orientierungsschicht und einer der Orientierungsschicht unmittelbar benachbarten Aufzeichnungsschicht, wobei die Aufzeichnungsschicht

1. homogen-planar und tangential orientierte oder homogen-planar und radial orientierte flüssigkristalline Verbindungen enthält,

2. ein optisch einachsiges Medium darstellt, für dessen Brechungsindices

$n_1$ (senkrecht zur Aufzeichnungsschichtebene),
$n_2$ (in der Aufzeichnungsschichtebene, senkrecht zur optischen Hauptachse),
$n_3$ (in der Aufzeichnungsschichtebene, parallel zur optischen Hauptachse) und
$n_{iso}$ (Brechungsindex der thermisch veränderten Bereiche) mit

$$n_{iso} = 1/3\ (n_1 + n_2 + n_3)$$

für Licht der Wellenlänge $\lambda$ = 780 nm die Beziehungen

$n_1 = n_2 < n_3$ oder

$n_1 = n_2 > n_3$

und

$|\Delta n| = |n_3 - n_2| > 0{,}05$ oder
$|\Delta n| = |n_{iso} - n_2| > 0{,}05$ oder alternativ
$|\Delta n| = |n_{iso} - n_3| > 0{,}05$

gelten, und welche
3. eine Dicke d von
$0{,}05\ \lambda'/|\Delta n|$ bis $0{,}6\ \lambda'/|\Delta n|$
aufweist, wobei $\lambda'$ = Wellenlänge des Leselaserlichts.

## Claims

**1.** A laser-optical write and read process whereby a thermally alterable recording layer which contains liquid-crystalline compounds in homogeneous planar orientation and forms part of a multilayer, sheetlike recording material is written by means of a write laser beam with analogue or digital data in the form of thermally altered areas, whereafter the written data are read by means of a read laser beam by analyzing the light transmitted or reflected by the recording material, which comprises

a) reading the data by determining the polarization-optical contrast between the thermally altered and the unaltered areas and/or utilizing for this purpose the interference of the light rays which form from the laser lightwaves in a Gaussian intensity distribution owing to the different phase velocities of the light in the center of thermally altered areas on the one hand and their thermally unaltered surroundings on the other,

b) using a recording layer which is an optically monoaxial medium whose refractive indices
$n_1$ (perpendicular to the recording layer plane),
$n_2$ (in the recording layer plane, perpendicular to the optical main axis),
$n_3$ in the recording layer plane, parallel to the optical main axis) and
$n_{iso}$ (refractive index of the thermally altered areas) with $n_{iso} = 1/3\ (n_1 + n_2 + n_3)$
for light of the wavelength $\lambda$ = 780 nm
are subject to the relations
$n_1 = n_2 < n_3$ or
$n_1 = n_2 > n_3$
and

$|\Delta n| = |n_3 - n_2| > 0.05$ or
$|\Delta n| = |n_{iso} - n_2| > 0.05$ or alternatively
$|\Delta n| = |n_{iso} - n_3| > 0.05$

and which has a thickness d of
$0.05\ \lambda'/|\Delta n|$ to $0.6\ \lambda'/|\Delta n|$
where $\lambda'$ is the wavelength of the read laser light,

c) guiding the read laser beam over the recording material in a relative motion in the direction of the optical main axis of the recording layer or perpendicular thereto in such a way that the plane of polarization $\vec{E}$ of the read laser beam, upon incidence on the recording layer, forms an angle $\theta$ of $0° \pm 10°$, $45° \pm 10°$ or $90° \pm 10°$ with the optical main axis of the recording layer,

and

d) in the event that the transmitted light is analyzed using a laser beam of light of wavelength $\lambda'$ from $1.66\ d\ |\Delta n|$ to $5\ d\ |\Delta n|$
and in the event that the reflected light is analyzed using a laser beam of wavelength $\lambda'$ from $3.33\ d\ |\Delta n|$ to $20\ d\ |\Delta n|$.

**2.** A process as claimed in claim 1, wherein the recording layer used contains oriented, dichroic, coloring components and the write laser beam is directed in such a way that the plane of polarization $\vec{E}$ of the said beam, upon incidence on the recording layer, forms an angle $\theta'$ from $-45°$ to $+45°$ with the transition dipole moment $\vec{\mu}$ of the oriented dichroic components.

**3.** A laser-optical write and read instrument for implementing the process as claimed in claim 1 or 2, containing essentially a disk drive and a laser-optical write and read head comprising a laser light source or a plurality of laser light sources for laser light of different wavelengths and, in the beam of the

laser light, a dielectric beam splitter for combining laser beams of different wavelengths, a polarizing beam splitter or a substantially nonpolarizing beam splitter and also, if appropriate, a $\lambda/4$ plate, wherein

a) the laser-optical write and read head is mounted to be rotatable by an angle from 0° to 90° about the optical axis defined by the direction of propagation of the laser light, and there are provided means for locking said head at 0°, 45° and 90°,

and/or

b) there is present in the beam path between the polarizing beam splitter or the substantially nonpolarizing beam splitter and the recording layer, in addition to the $\lambda/4$ plate, or in place thereof, a $\lambda/2$ plate,

where

c) the $\lambda/4$ plate and/or the $\lambda/2$ plate is mounted so as to be rotatable about the optical axis by an angle from 0° to ±45° relative to the polarization plane $\vec{E}$ of the emitted plane polarized laser light and there are provided means for blocking said plate(s) at 0°, ±22.5° and ±45°.

**4.** A multilayer laser-optical data disk for implementing the process as claimed in claim 1 or 2, containing a base layer, at least one orienting layer and a recording layer directly adjacent to the orienting layer, where the recording layer

1. contains liquid-crystalline compounds in homogeneous planar and tangential orientation or homogeneous planar and radial orientation,
2. is an optically monoaxial medium whose refractive indices

   $n_1$ (perpendicular to the recording layer plane),
   $n_2$ (in the recording layer plane, perpendicular to the optical main axis),
   $n_3$ (in the recording layer plane, parallel to the optical main axis) and
   $n_{iso}$ (refractive index of the thermally altered areas) with $n_{iso} = 1/3\ (n_1 + n_2 + n_3)$
   for light of the wavelength $\lambda = 780$ nm
   are subject to the relations
   $n_1 = n_2 < n_3$ or
   $n_1 = n_2 > n_3$
   and

   $|\Delta n| = |n_3 - n_2| > 0.05$ or
   $|\Delta n| = |n_{iso} - n_2| > 0.05$ or alternatively
   $|\Delta n| = |n_{iso} - n_3| > 0.05$

   and
3. has a thickness d from
   $0.05\ \lambda'/|\Delta n|$ to $0.6\ \lambda'/|\Delta n|$, where $\lambda'$ is the wavelength of the read laser light.

## Revendications

**1.** Procédé d'écriture et de lecture optique laser dans lequel on écrit dans la couche d'enregistrement contenant des composés cristallins-liquides orientés de manière homogène dans un plan et modifiable thermiquement d'un support d'enregistrement multicouche plat, au moyen d'un faisceau laser d'écriture, des données analogiques ou numériques sous forme de zones modifiés thermiquement, après quoi on lit les données écrites au moyen d'un faisceau laser de lecture en analysant la lumière transmise ou réfléchie par le support d'enregistrement, caractérisé par le fait qu'on y

a) lit les données en déterminant le contraste optique de polarisation entre les zones modifiées thermiquement et les zones non modifiées et/ou utilise pour cela l'interférence d'ondes lumineuses qui se forment à partir des ondes de lumière laser avec distribution gaussienne de l'intensité en raison de la vitesse de phase différente de la lumière au centre des zones modifiées thermiquement d'une part et de leur environnement non modifié thermiquement d'autre part,

b) utilise une couche d'enregistrement qui constitue un milieu optiquement uniaxe dont les indices de réfraction
$n_1$ (perpendiculairement au plan de la couche d'enregistrement),
$n_2$ (dans le plan de la couche d'enregistrement, perpendiculairement à l'axe optique principal),
$n_3$ (dans le plan de la couche d'enregistrement, parallèlement à l'axe optique principal) et
$n_{iso}$ (indice de réfraction des zones modifiées thermiquement)
avec $n_{iso} = 1/3\ (n_1 + n_2 + n_3)$

pour la lumière de longueur d'onde $\lambda = 780$ nm
satisfont aux relations
$n_1 = n_2 < n_3$ ou
$n_1 = n_2 > n_3$
et

$|\Delta n| = |n_3 - n_2| > 0,05$ ou
$|\Delta n| = |n_{iso} - 2| > 0,05$ ou bien
$|\Delta n| = |n_{iso} - 3| > 0,05$,

et qui a une épaisseur d de
$0,05\ \lambda'/|\Delta n|$ à $0,6\ \lambda'|\Delta n|$,
avec $\lambda'$ = longueur d'onde de la lumière laser de lecture,
c) fait passer le faisceau laser de lecture, en un mouvement relatif, sur le support d'enregistrement dans la direction de l'axe optique principal de la couche d'enregistrement ou perpendiculairement à cette direction, en l'envoyant de façon que le plan de sa polarisation $\vec{E}$, à l'incidence sur la couche d'enregistrement, fasse, avec l'axe optique principal de celle-ci, un angle $\theta$ de $0° \pm 10°$,$45° \pm 10°$ ou $90° \pm 10°$,
et
d) utilise, en cas d'analyse de la lumière transmise, un faisceau laser de lumière de longueur d'onde $\lambda'$ de
$1,66\ d\ |\Delta n|$ à $5d\ |\Delta n|$,
et, en cas d'analyse de la lumière réfléchie, un faisceau laser de lumière de longueur d'onde $\lambda'$ de
$3,33\ d\ |\Delta n|$ à $20\ d\ |\Delta n|$.

**2.** Procédé selon la revendication 1, caractérisé par le fait qu'on utilise pour cela une couche d'enregistrement qui contient des constituants chromogènes dichroïques orientés et envoie le faisceau laser d'écriture de façon que le plan de sa polarisation $\vec{E}$, à l'incidence sur la couche d'enregistrement, fasse, avec le moment dipolaire de transition $\vec{\mu}$ des constituants dichroïques orientés, un angle $\theta'$ compris entre $-45°$ et $+45°$.

**3.** Appareil d'écriture et delecture optique laser pour la mise en oeuvre du procédé selon l'une des revendications 1 et 2, qui comprend essentiellement un plateau tourne-disques et une tête d'écriture-lecture optique laser, celle-ci présentant une source de lumière laser ou plusieurs sources de lumière laser pour la production de lumière laser de différentes longueurs d'onde et, sur le trajet du faisceau de lumière laser, un diviseur diélectrique de faisceau pour la réunion de faisceaux laser de différentes longueurs d'onde, un diviseur de faisceau à polarisation ou un diviseur de faisceau pratiquement non polarisant, et éventuellement une lame quart d'onde, caractérisé par le fait que
a) la tête d'écriture-lecture optique laser est montée tournante autour de l'axe optique, défini par la direction de propagation de la lumière laser, dans un angle de $0°$ à $90°$, et il est prévu des moyens d'arrêt de celle-ci à $0°$, $45°$ et $90°$,
et/ou que
b) sur la trajet du faisceau, entre le diviseur de faisceau à polarisation ou le diviseur de faisceau pratiquement non polarisant et la couche d'enregistrement se trouve, en plus de la lame quart d'onde ou à la place de celle-ci, une lame demi-onde,
c) la lame quart d'onde et/ou la lame demi-onde étant montée tournante autour de l'axe optique dans un angle de $0°$ à $\pm 45°$ par rapport au plan de polarisation $\vec{E}$ de la lumière laser polarisée linéairement émise, et des moyens étant prévus pour l'arrêt de celle(s)-ci à $0°$, $\pm 22,5°$ et.

**4.** Disque support de données optique laser multicouche pour la mise en oeuvre du procédé selon l'une des revendications 1 et 2, comprenant une couche substrat, au moins une couche d'orientation, et une couche d'enregistrement immédiatement voisine de cette couche d'orientation, la couche d'enregistrement
1. contenant des composés cristallins-liquides orientés de manière homogène dans un plan et tangentiellement ou orientés de manière homogène dans un plan et radialement,
2. constituant un milieu optiquement uniaxe dont les indices de réfraction
$n_1$ (perpendiculairement au plan de la couche d'enregistrement),
$n_2$ (dans le plan de la couche d'enregistrement, perpendiculairement à l'axe optique principal),

$n_3$ (dans le plan de la couche d'enregistrement, parallèlement à l'axe optique principal) et niso (indice de réfraction des zones modifiées thermiquement)
avec niso = 1/3 ($n_1$ + $n_2$ + $n_3$)
pour la lumière de longueur d'onde $\lambda$ = 780 nm
satisfont aux relations
$n_1 = n_2 < n_3$ ou
$n_1 = n_2 < n_3$
et

$|\Delta n| = |n_3 - n_2| > 0{,}05$ ou
$|\Delta n| = |n_{iso} - n_2| > 0\ 05$ ou bien
$|\Delta n| = |n_{iso} - n_3| > 0{,}05$,

et
3. ayant une épaisseur d de
0,05 $\lambda'|\Delta n|$ à 0,6 $\lambda'/|\Delta n|$,
avec $\lambda'$ = longueur d'onde de lumière laser de lecture.